# EUROPEAN PATENT APPLICATION

(11) **EP 4 631 684 A2**
(43) Date of publication of application: **15.10.2025**
(21) Application number: 25168391.8
(22) Date of filing: 03.04.2025
(51) Int. Cl.: B27B 9/00, B27G 19/04, B23D 45/16

(54) **CIRCULAR SAW**

(30) Priority: 10.04.2024 US 202418631663
(71) Applicant: Black & Decker, Inc., New Britain, CT 06053 (US)
(72) Inventor: KENNEDY, David Emery, Baltimore, 21286 (US); TOMAYKO, David C., TOWSON, 21286 (US); TANG, Pan Fei, Towson, 21286 (US); MOUNTAIN, Craig, Towson, 21286 (US); CHRISTOPHERSEN, Kyle J., Towson, 21286 (US)
(74) Representative: SBD IPAdmin

(57) **Abstract**

A circular saw (100) includes an upper blade housing (108) and a lower blade guard (110) coupled to the upper blade housing (108). The lower blade guard (110) rotates about an axis (129, 130, 144) and includes a guide track (132). The circular saw (100) includes a lever (134) having a guide track (132) engaging end (152b) and a user engaging end (152b). The lever (134) is coupled to the upper blade housing (108) at a lever (134) pivot point positioned between the guide track (132) engaging end (152b) and the user engaging end (152b). The guide track (132) engaging end (152b) includes a contact member (157) configured to engage the guide track (132) to rotate the lower blade guard (110).

## Description

### TECHNICAL FIELD

This description relates to features of a circular saw.

### BACKGROUND

Circular saws are used to cut many types of workpieces on a work site, including wood, metal, composite, plastic, etc. Typically, circular saws include a motor that turns a motor spindle coupled to a blade. The blade is housed in a blade housing that may be coupled to the motor housing. The blade housing may include a lower blade guard around the blade to prevent contact with the blade when making cuts. It is often desirable to retract the lower blade guard to expose the blade and/or get a better view of where the blade may contact a workpiece. In addition, it can be helpful to retract the lower blade guard before commencing cuts in a workpiece or to help free the lower blade guard if it gets snagged on a workpiece.

The lower blade guard may be biased via a spring in a closed position. The lower blade guard is retracted to expose the spinning blade to make cuts in a workpiece. The lower blade guard can be pushed open by an edge of the workpiece as the saw moves forward on the workpiece. If an operator wishes to expose the blade before commencing a cut, some circular saws allow an operator to retract the lower blade guard by pulling it open by hand, taking one hand away from stabilizing the saw. Other saws provide a lever that an operator may push or pull to retract the lower blade guard, but they are not optimized to minimize the peak forces that a user experiences.

Metal-cutting circular saws typically include a chip collection component/system to collect metal chips generated during a cut. Circular saws used to cut metal typically include chip collectors to collect and prevent the release of the hot and/or sharp chips generated during a cut into the work environment. While the chip collector may keep metal chips out of the environment around an operator and/or provide increased guarding around the metal cutting circular saw, the chip collector and additional guarding provided by the upper blade guard required by a metal cutting circular saw may also make it hard for the operator to see where the workpiece meets the rotating blade through the circular saw.

Cutting a workpiece generates heat in the workpiece and the circular saw, especially when the workpiece is metal. Because the chips generated from a metal workpiece cut are often hot, the chip collectors in which the chips are collected and accumulate also get hot. Moreover, retaining the heat of the chips collected in the chip collector against the circular saw may prevent portions of the circular saw from being able to cool effectively.

Circular saws have standards around the sizing of the flange pieces that couple the rotating blade to motor spindle. It is desirable to maximize the depth of cut that can be made with any circular saw in view of these standards.

### SUMMARY

In some aspects, the techniques described herein relate to a circular saw including: an upper blade housing; a lower blade guard coupled to the upper blade housing, the lower blade guard rotates about an axis and includes a guide track, and a lever having a guide track engaging end and a user engaging end, the lever coupled to the upper blade housing at a lever pivot point positioned between the guide track engaging end and the user engaging end, the guide track engaging end including a contact member configured to engage the guide track to rotate the lower blade guard.

Optionally, the user engaging end includes a movable lever positioned exterior to the upper blade housing.

Optionally, the contact member is configured to pull up on the guide track or apply an outward force to the guide track.

Optionally, the contact member engages the guide track at a trailing horizontal side of the lever pivot point opposite a cutting horizontal side of the lever pivot point.

Optionally, the lower blade guard is configured such that an average rotation/thumb force applied to the user engaging end of the lever to achieve full retraction system retraction is: at least 1.8° per Newton over a course of the full retraction system retraction; or at least 3.5° per Newton over a course of the full retraction system retraction.

Optionally, the lower blade guard is configured to rotate through a range of motion by applying force to the lever with a difference of no more than 20 newtons between a highest minimum force and a lowest minimum force needed to rotate the lower blade guard.

Optionally, the contact member is a roller wheel.

Optionally, a lever spring is positioned between the upper blade housing and the lever pivot point, the lever spring biased to restore the lever to a resting position.

Optionally, a lower guard spring is positioned between the upper blade housing and the lower blade guard adjacent to the axis.

Optionally, the lever includes an aperture positioned at the lever pivot point, and the lever is coupled to the upper blade housing via a bushing positioned in the aperture.

In some aspects, the techniques described herein relate to a circular saw including: a blade housing configured to house a blade rotated by an output spindle coupled to the blade housing; and a window positioned in the blade housing having a window longitudinal direction positioned at an angle between 0° and 45° degrees with respect to a plane including the blade.

Optionally, the angle is between 7° and 9°.

Optionally, the window comprises a laminated glass.

Optionally, the window is retained between the blade housing and a window retaining frame coupled to the blade housing.

Optionally, the window further comprises a plane of glass and a viscoelastic circumferential seal.

Optionally, the viscoelastic circumferential seal includes a channel-shaped cross-sectional profile having three sides that is flared at a joint between a first side and a second side.

Optionally, the circular saw further comprises: an illuminator positioned on a side of the window outside the blade housing, the illuminator configured to radiate light towards the blade.

Optionally, a lens is positioned between the illuminator and the window.

Optionally, the window further comprises a light baffle member positioned on a window surface along a horizontal dimension of the circular saw in an operational direction between the illuminator and a blade of the circular saw.

Optionally, the window further comprises a pane of glass and a viscoelastic circumferential seal including an integrated light baffle member.

In some aspects, the techniques described herein relate to a circular saw including: a blade housing configured to house a blade rotated by an output spindle, the blade housing including a chip collector ramp configured to receive chips generated when the blade cuts through a workpiece; and a chip collector including: a chip container including a chip entry port coupled to the chip collector ramp, and an outer housing that substantially covers a face of the chip container, the outer housing including a first vent and a second vent, the first vent and the second vent being fluidly connected via a continuous air path in a gap area between the chip container and the outer housing and positioned to provide passive cooling to the chip container.

In some aspects, the techniques described herein relate to a circular saw including: a motor housing that at least partially houses a motor, the motor having a motor spindle including a first stage pinion; a blade housing that at least partially houses a transmission including: an intermediate gear including a first stage gear configured to engage the first stage pinion and a second stage pinion, the intermediate gear positioned at a trailing end of the motor spindle opposite a cutting end of the circular saw in a horizontal dimension when the circular saw is in an operational position, and an output spindle including an output gear configured to engage the second stage pinion; and a blade coupled to the output spindle.

The details of one or more implementations are set forth in the accompanying drawings and the description below. Other features will be apparent from the description and drawings, and from the claims.

### BRIEF DESCRIPTION OF THE DRAWINGS

FIG. 1 depicts a front elevation view of an example circular saw, in accordance with the present disclosure.
FIG. 2 depicts a right side elevation view of the circular saw of FIG. 1.
FIG. 3 depicts a rear elevation view of the circular saw of FIG. 1.
FIG. 4 depicts a left side elevation view of the circular saw of FIG. 1.
FIG. 5 depicts a top plan view of the circular saw of FIG. 1.
FIG. 6 depicts a bottom plan view of the circular saw of FIG. 1.
FIG. 7 depicts a top, rear, right isometric view of the circular saw of FIG. 1.
FIG. 8 depicts a top, front, right isometric view of the circular saw of FIG. 1.
FIG. 9 depicts a top, front, left isometric view of the circular saw of FIG. 1.
FIG. 10 depicts a top, rear, left isometric view of the circular saw of FIG. 1.
FIG. 11 depicts a bottom, rear, right isometric view of the circular saw of FIG. 1.
FIG. 12 depicts a bottom, front, right isometric view of the circular saw of FIG. 1.
FIG. 13 depicts a bottom, front, left isometric view of the circular saw of FIG. 1.
FIG. 14 depicts a bottom, rear, left isometric view of the circular saw of FIG. 1.
FIG. 15 depicts a top, rear, left isometric view of a circular saw of FIG. 1 and an example saw blade, with a lower blade guard partially retracted.
FIG. 16 depicts a top, front, right isometric view of the circular saw of FIG. 1 and an example saw blade, with the lower blade guard fully retracted.
FIG. 17 depicts a top, rear, left isometric view of the circular saw of FIG. 1 and an example saw blade, with the lower blade guard fully retracted.
FIG. 18 depicts a top, rear, right isometric view of the example circular saw of FIG. 1 with a chip collector and a portion of a blade housing hidden with the lower blade guard fully closed.
FIG. 19 depicts a right side elevation view of the example circular saw of FIG. 1 with the chip collector and a portion of the blade housing hidden with the lower blade guard fully closed.
FIG. 20 depicts a right side elevation cross-sectional view of the example circular saw of FIG. 1 along section line A-A of FIG. 5.
FIG. 21 depicts a top, rear, right isometric view of the example circular saw of FIG. 1 with a chip collector and a portion of a blade housing hidden with the lower blade guard fully retracted.
FIG. 22 depicts a right side elevation view of the example circular saw of FIG. 1 with the chip collector and a portion of the blade housing hidden with the lower blade guard is fully retracted by a guard retraction system.
FIG. 23 depicts a right side elevation cross-sectional view of the example circular saw of FIG. 1 along section line B-B of FIG. 5, wherein the lower blade guard is fully retracted by a guard retraction system.
FIG. 24 depicts an inside view of an example lower blade guard of the example circular saw of FIG. 1.
FIG. 25 depicts a graph, in an example force curve of the present disclosure.
FIG. 26 depicts an exploded top, front, right isometric view of an example remote lower blade guard retraction system of the example circular saw of FIG. 1 with a chip collector and a portion of the blade housing hidden.
FIG. 27 depicts an exploded top, rear, right isometric view of an example remote lower blade guard retraction system of the example circular saw of FIG. 1 with the chip collector and a portion of the blade housing hidden.
FIG. 28 depicts a top, left, rear isometric view of the example circular saw of FIG. 1.
FIG. 29 depicts detail A of FIG. 4.
FIG. 30 depicts detail B of FIG. 28.
FIG. 31 depicts a front elevation cross-sectional view of the example circular saw of FIG. 1 along section line C-C of FIG. 22.
FIG. 32 depicts detail C of FIG. 31.
FIG. 33 depicts top, right, rear view of the example circular saw of FIG. 1 with the chip collector and a portion of the blade guard hidden and a window retaining frame exploded.
FIG. 34 depicts a top, left, front isometric view of an example window of the example circular saw of FIG. 1.
FIG. 35 depicts a top, right, rear isometric view of the example window of FIG. 34.
FIG. 36 depicts a rear elevation view of the example window of FIG. 34.
FIG. 37 depicts a right side elevation view of the example window of FIG. 34.
FIG. 38 depicts a cross-section view of the example window of FIG. 34 along section line D-D of FIG. 37.
FIG. 39 depicts a cross-section view of the example window of FIG. 34 along section line E-E of FIG. 37.
FIG. 40 depicts a top, front, right isometric view of the example circular saw of FIG. 1 with the chip collector hidden.
FIG. 41 depicts a top, front, right isometric view of the example circular saw of FIG. 1 with the chip collector and an intermediate guard hidden.
FIG. 42 depicts a detail view of FIG. 41.
FIG. 43 depicts a front elevation cross-sectional view of the example circular saw of FIG. 1 along cross-section line F-F of FIG. 2.
FIG. 44 depicts a top, rear, right isometric view of an example chip collector of the example circular saw of FIG. 1.
FIG. 45 depicts a right side elevation view of the example chip collector of FIG. 44.
FIG. 46 depicts a top plan view of the example chip collector of FIG. 44.
FIG. 47 depicts a bottom plan view of the example chip collector of FIG. 44.
FIG. 48 depicts a left side elevation view of the example chip collector of FIG. 44.
FIG. 49 depicts an elevation view of an example outer housing of the example chip collector with an inner section hidden.
FIG. 50 depicts a rear elevation cross-sectional view of the example chip collector along section line G-G of FIG. 48.
FIG. 51 depicts a front elevation cross-sectional view of the example circular saw of FIG. 1 along section line H-H of FIG. 2.
FIG. 52 depicts a plan cross-sectional view of the example circular saw of FIG. 1 along the section line I-I of FIG. 2.
FIG. 53 depicts a top, front, right isometric view of an example transmission of the example circular saw of FIG. 1.
FIG. 54 depicts a top, rear, right isometric view of the example transmission of FIG. 53.
FIG. 55 depicts a top, front, left isometric view of the example transmission of FIG. 53 with an example blade attached thereto.
FIG. 56 depicts a top rear, right isometric view of the example transmission and blade of FIG. 55.
FIG. 57 depicts a plan cross-sectional view of the example transmission and blade of FIG. 56.
FIG. 58 depicts a top, rear, left isometric view of an example gearset of the example transmission of FIG. 53.
FIG. 59 depicts a bottom, front, left isometric view of the example gearset of FIG. 58.
FIG. 60 depicts an exploded isometric view of the example circular saw of FIG. 1.

### DETAILED DESCRIPTION

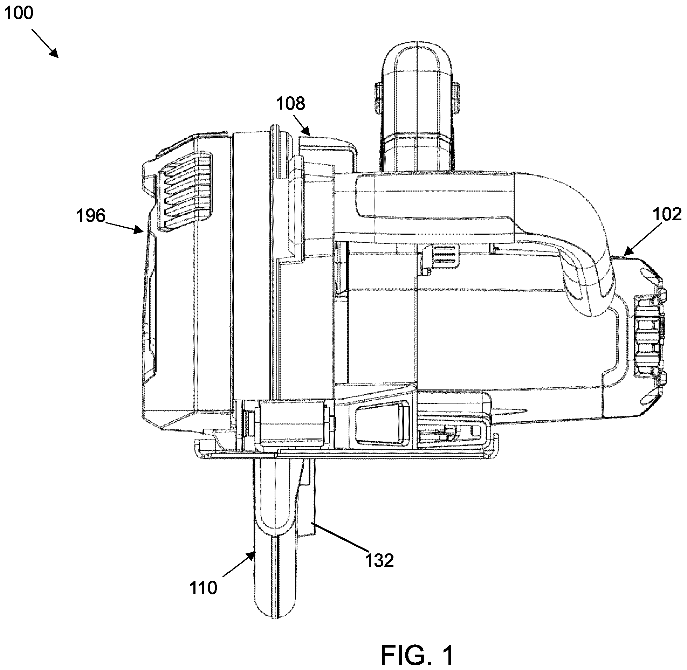

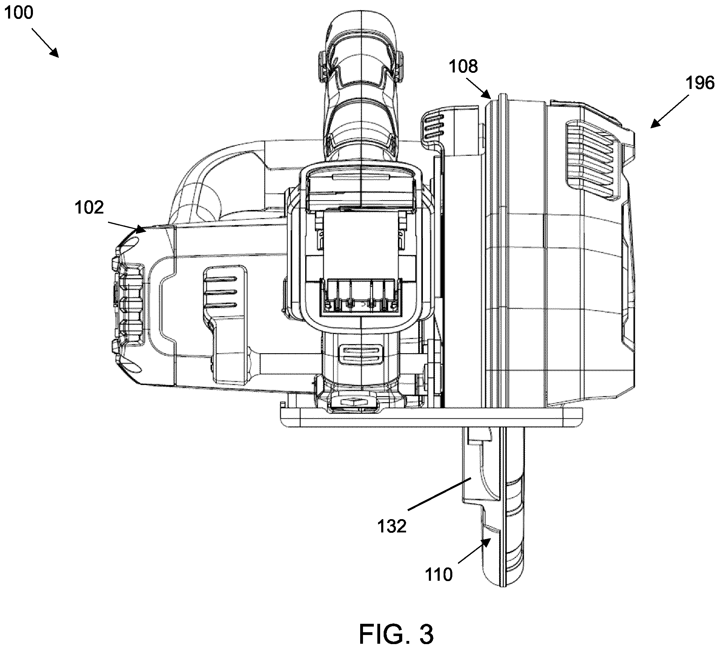

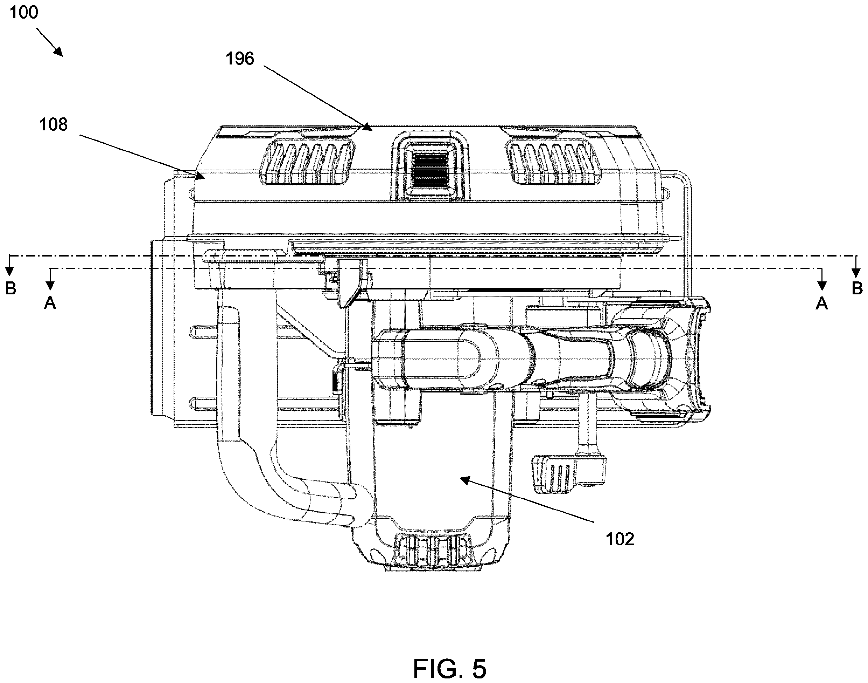

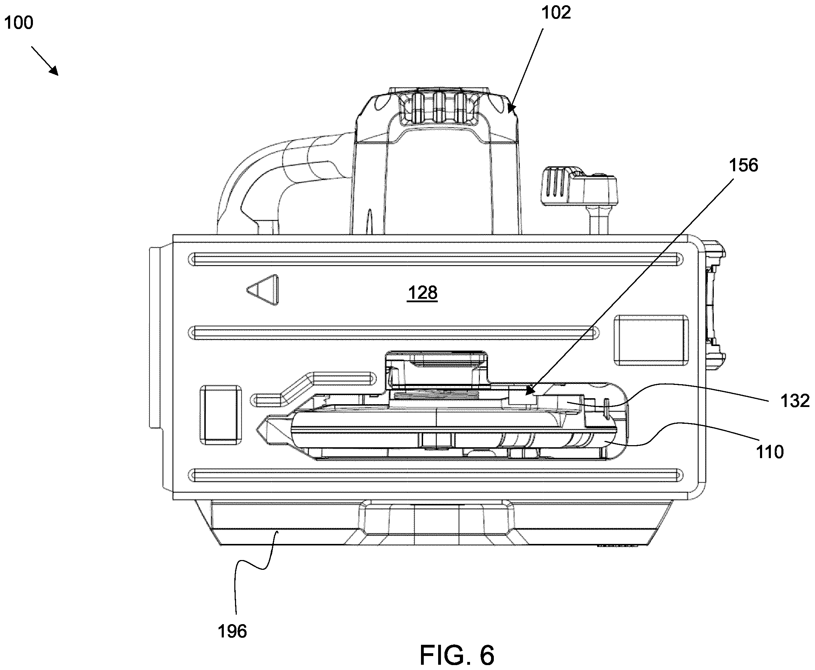

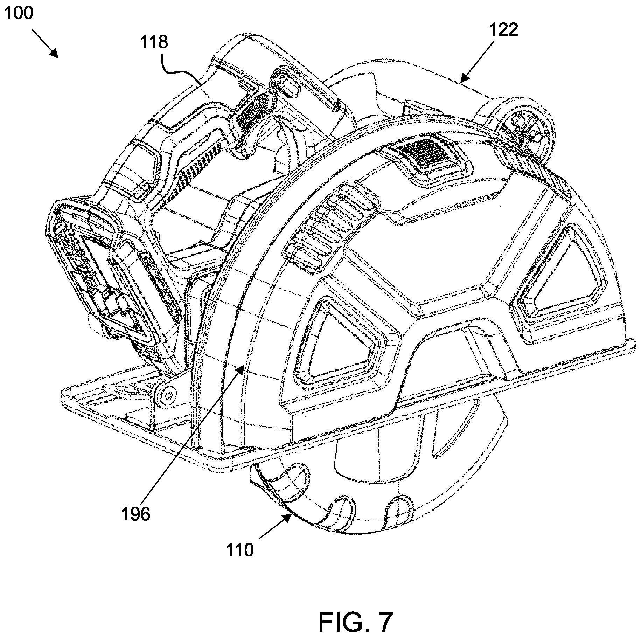

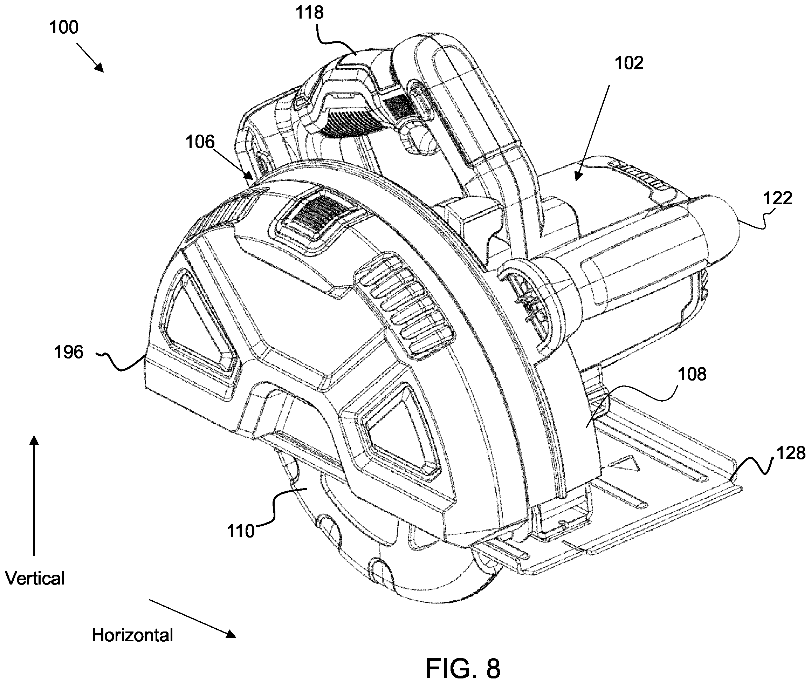

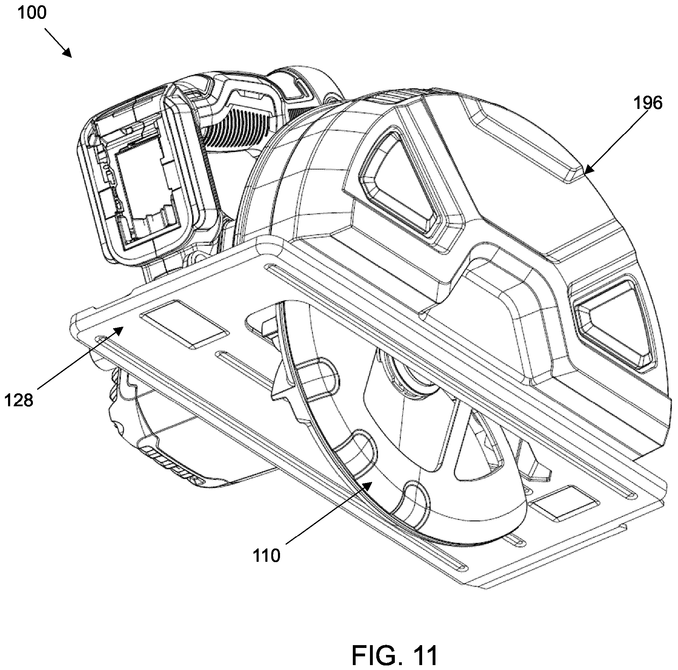

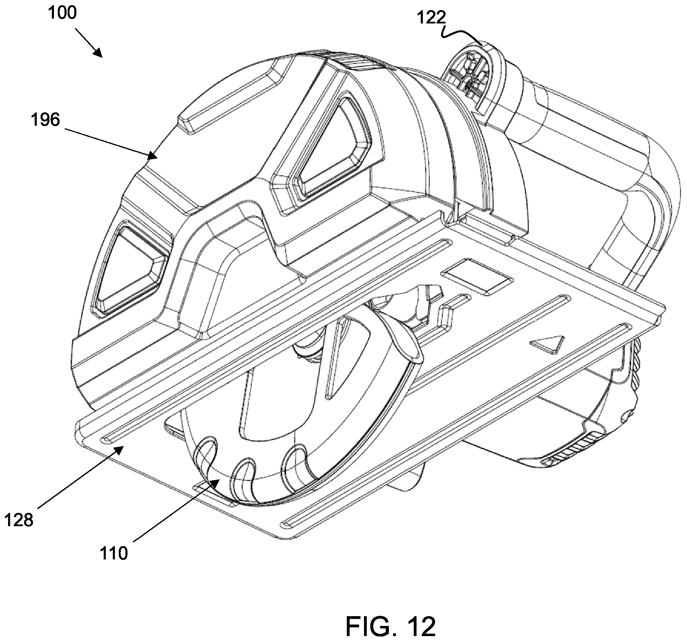

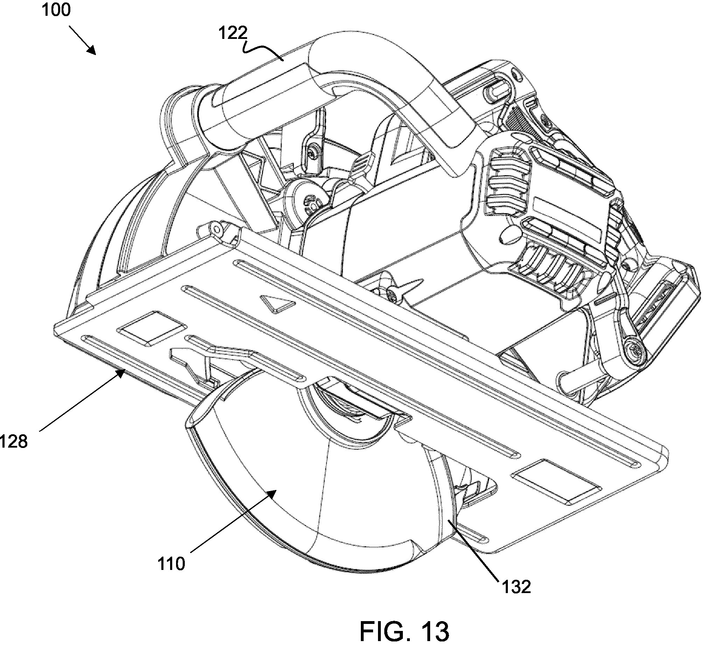

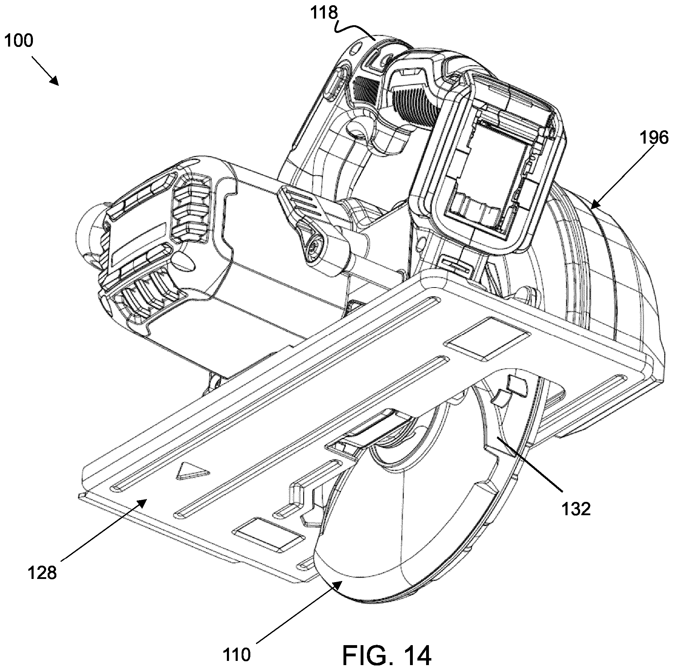

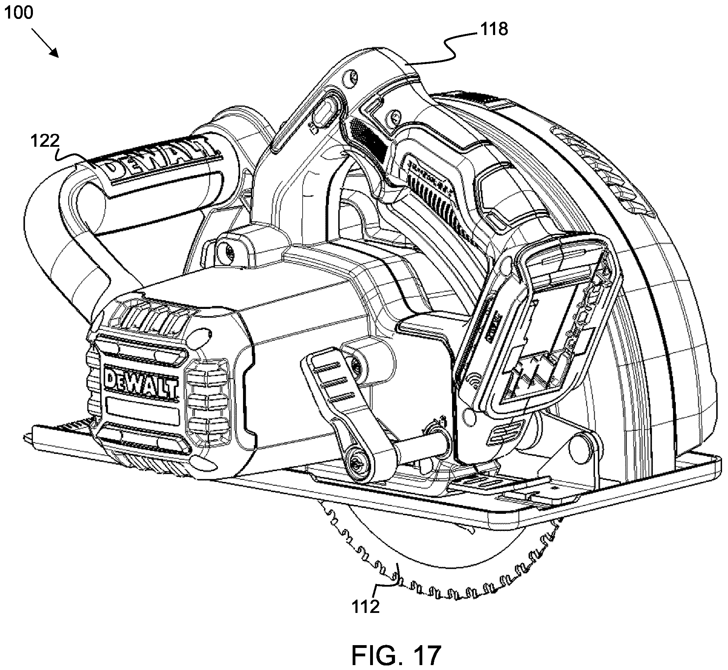

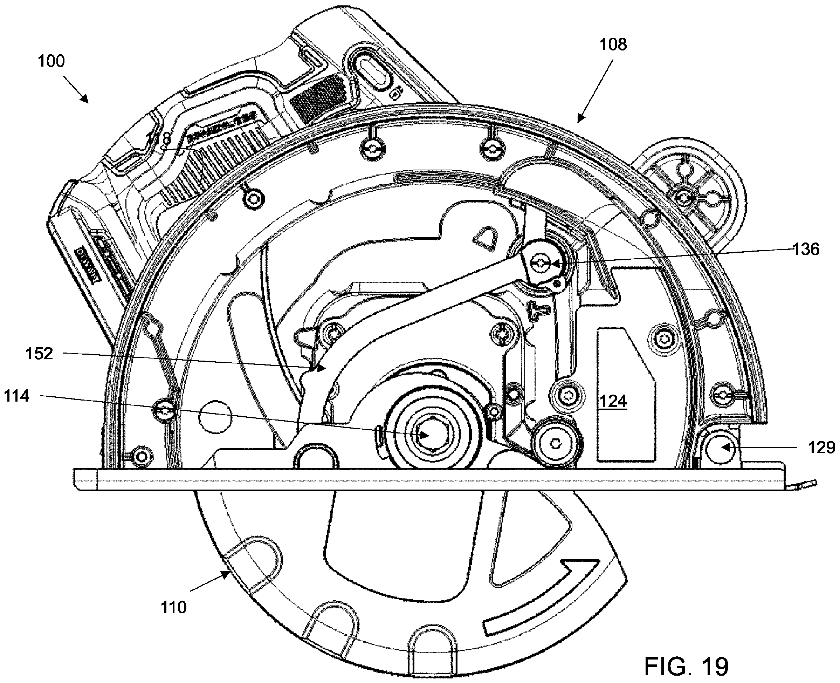

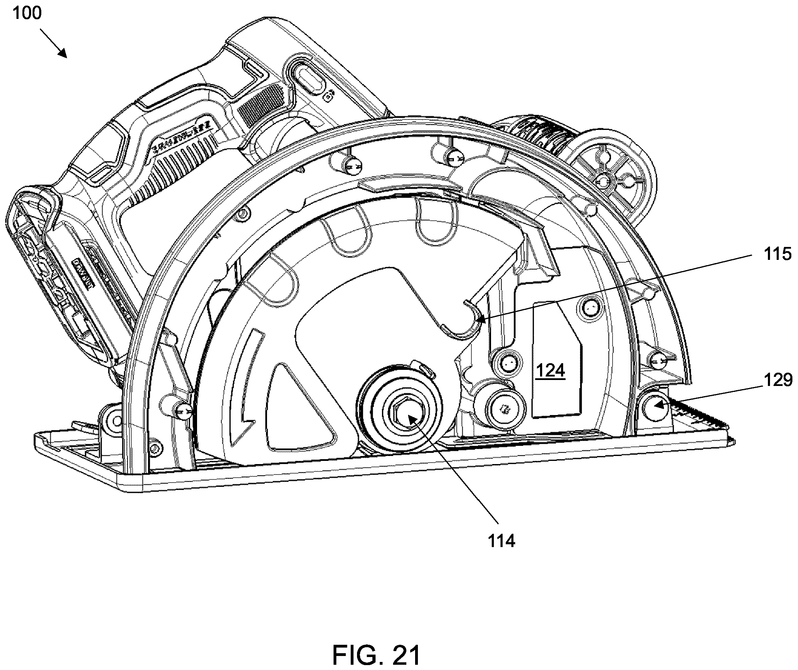

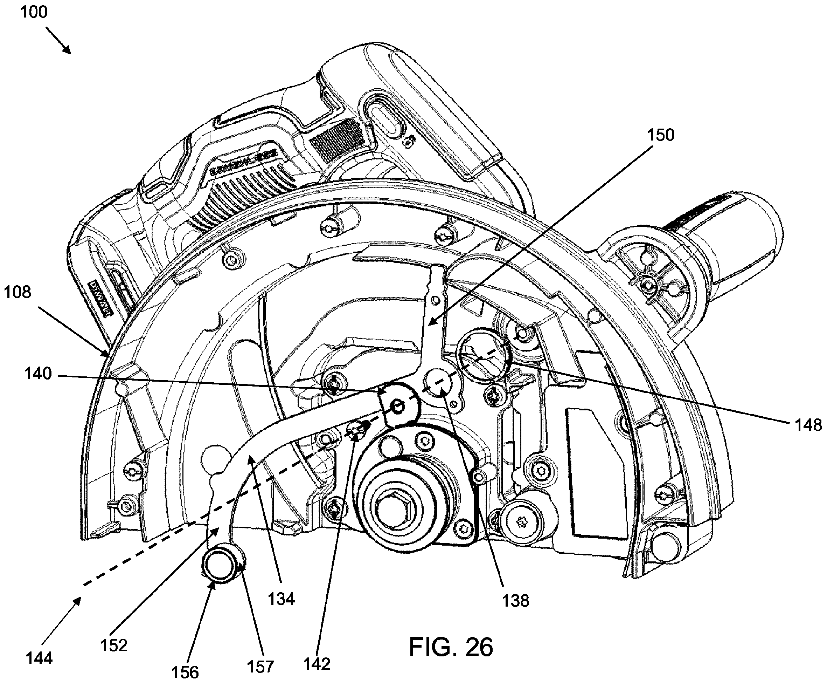

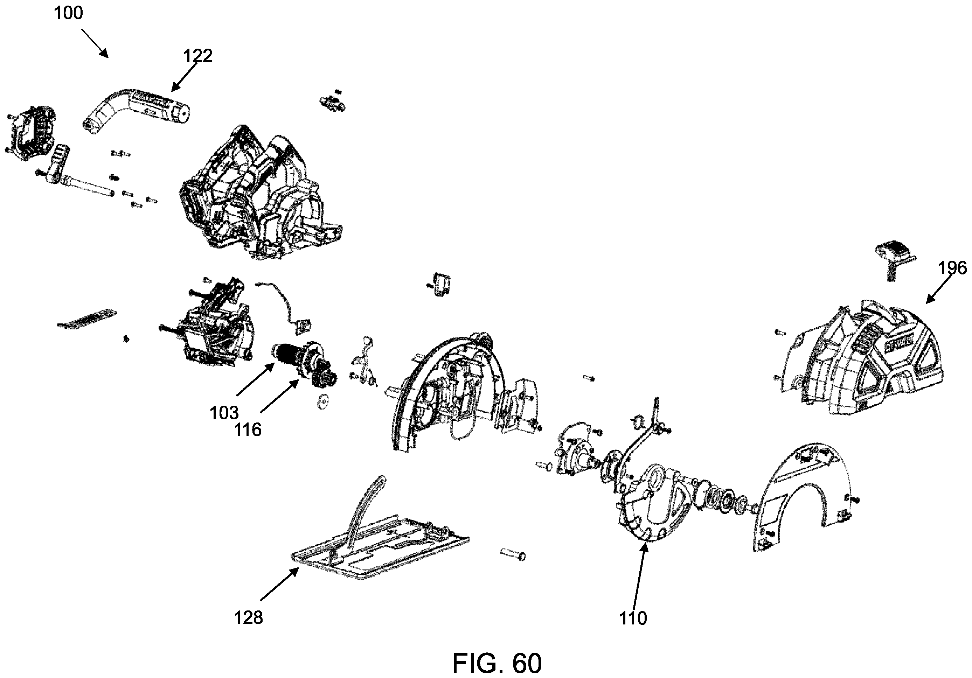

FIGs. 1-23, 26-28, 31, 33, 40-43, 51, 52, and 60 depict various views of a circular saw 100. The circular saw 100 may be used to cut any type of workpiece, including wood, metal, composite, plastic, etc. The circular saw 100 includes a motor housed within a motor housing 102 that turns a motor spindle 104. The motor housing 102 is coupled to a blade housing 106. The blade housing 106 may include an upper blade housing 108 coupled to a lower blade guard 110.

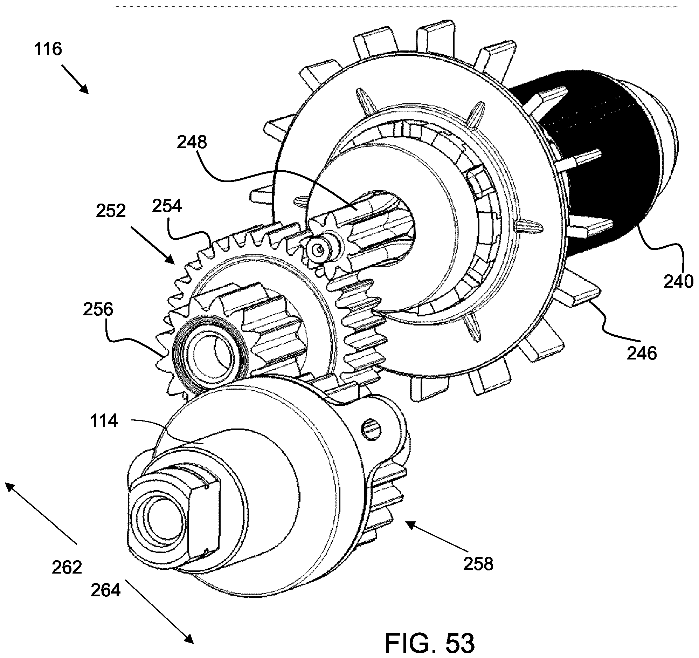

The blade housing 106 houses a blade 112. The blade 112 may be coupled to an output spindle 114. The output spindle 114 may be rotated by a transmission 116, as depicted in FIGs. 53-59. The transmission 116 may be driven by the motor spindle 104. Any of the features and/or functionality described below with regards to the motor spindle 104 below may apply to the output spindle 114 of the transmission 116.

The example circular saw 100 comprises a blade-right circular saw configuration, in which the blade is to the right of a handle set and motor. In alternative example embodiments, the circular saw 100 may comprise a blade-left circular saw configuration, in which the blade is to the left of a handle set and motor.

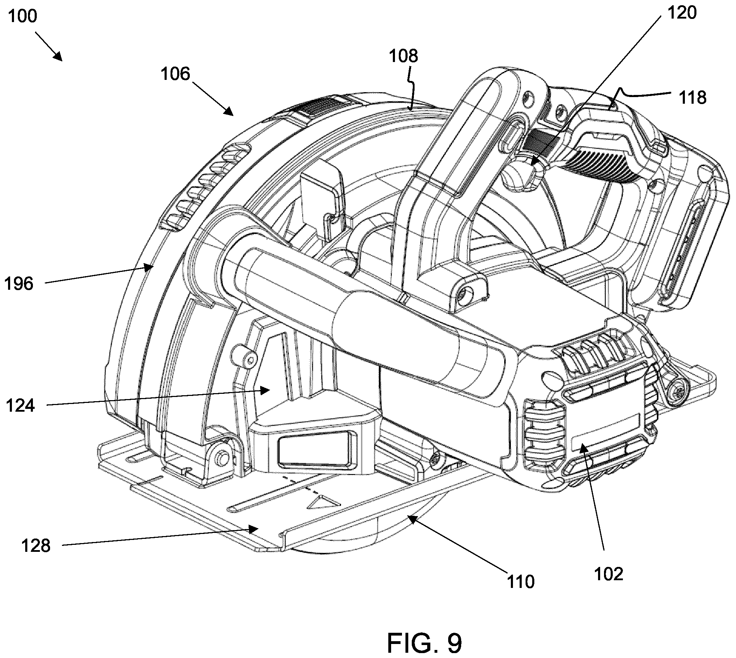

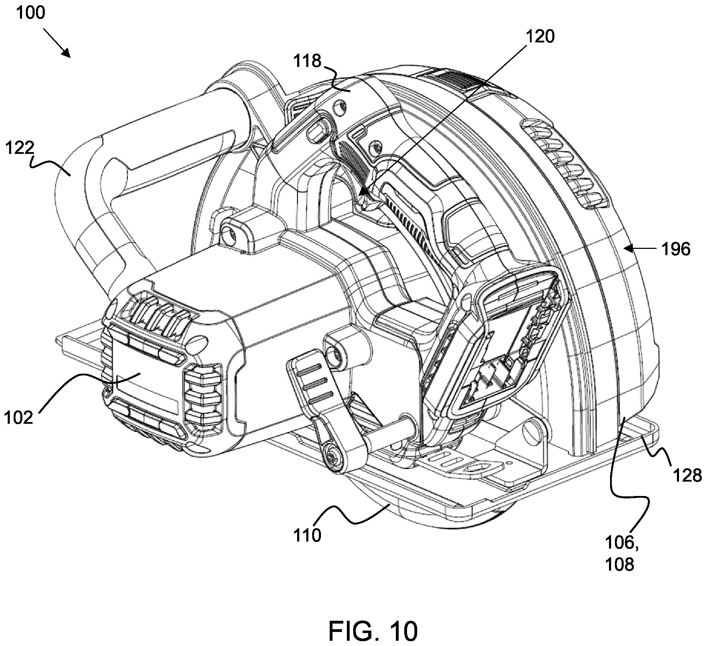

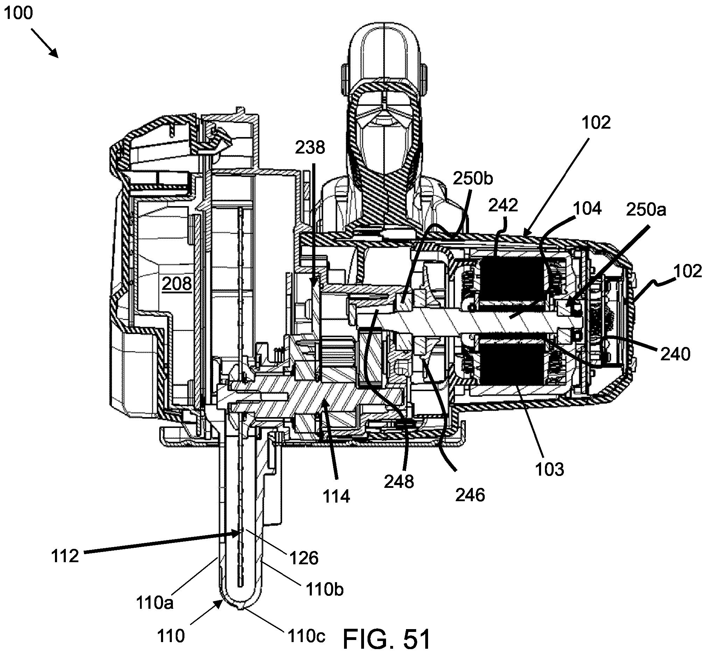

As may be seen in FIGs. 9 and 10, the motor housing 102 and the blade housing 106 may be positioned side-by-side. The motor housing 102 protects, supports, and provides ventilation for a motor (not pictured) operable to rotate a motor spindle 104 (see FIG. 51). The circular saw 100 may include a first handle (trigger handle) 118. The first handle 118 may include a trigger 120 to enable an operator to activate and control the motor 103. In an example embodiment, the circular saw 100 may further include a second handle (stabilizing handle) 122. The second handle 122 may provide a position for an operator's second hand to hold the circular saw 100 during operation. In the example circular saw 100, the first handle 118 is designed to be gripped by a user's right hand and the second handle 122 is designed to be gripped by a user's left hand.

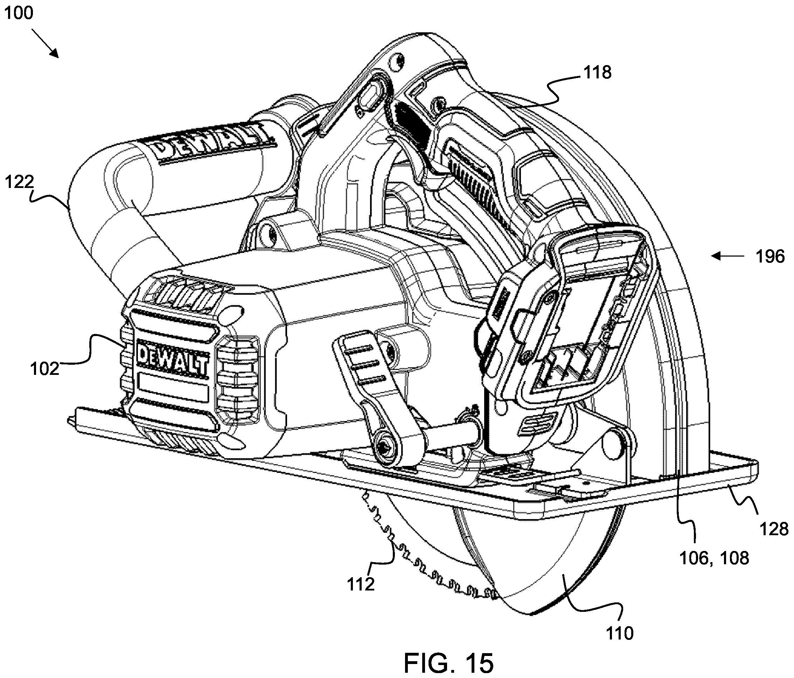

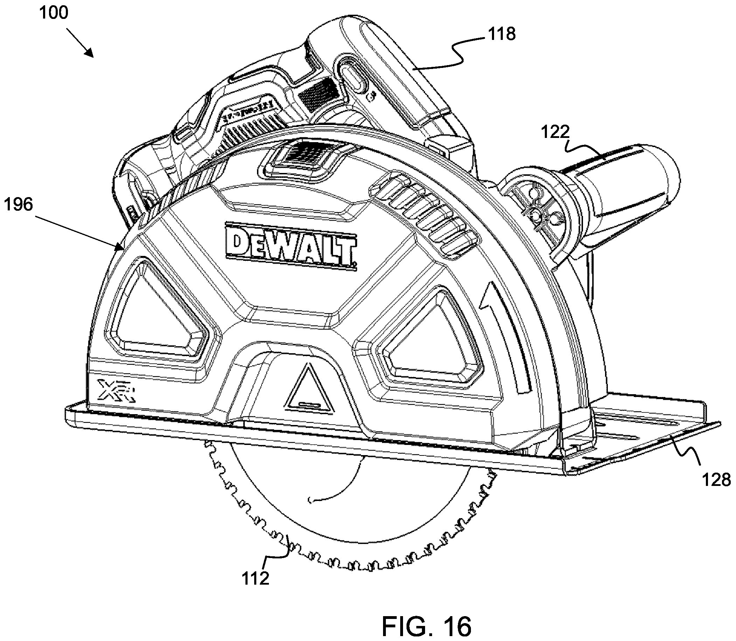

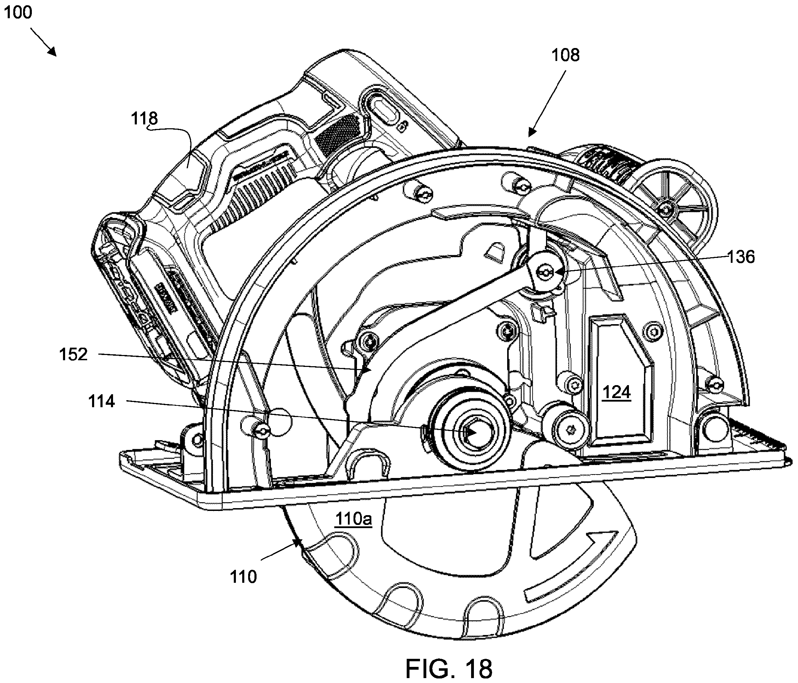

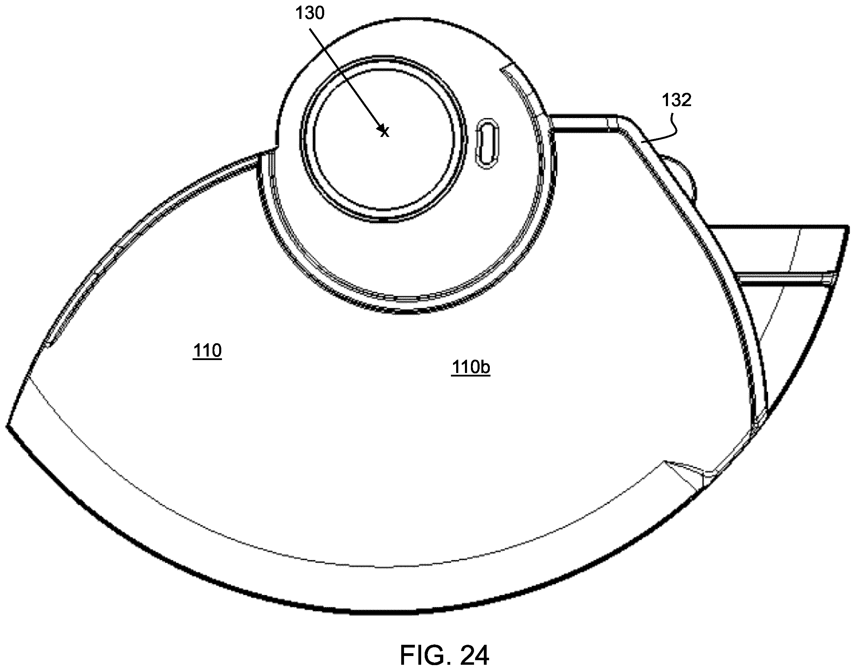

In an example, the blade housing 106 may protect and support the motor spindle 104 and the blade 112. The upper blade housing 108 may be stationary with regards to the motor housing 102 while the lower blade guard 110 may be a retractable, rotatable blade cover. For example, FIGs. 1-4, 7-14, 18, and 19 depict the lower blade guard 110 in a position where it maximizes coverage of the blade 112 (fully extended), whereas FIGs. 15, 22, 23, and 41 depict the lower blade guard 110 in a position where the guard is fully retracted by the guard retraction system and reduces coverage of the blade 112 for operation (referred to hereafter as "full retraction system retraction"). As illustrated, for example, in FIGs. 16, 17, 21, the lower blade guard 110 may be additionally rotated to enable changing of the blade 112. A user may utilize a finger notch 115 on the lower blade guard 110 to enable the additional rotation. This position may be referred to as "fully retracted." The lower blade guard 110 will be further discussed with regards to FIGs. 18-27 below.

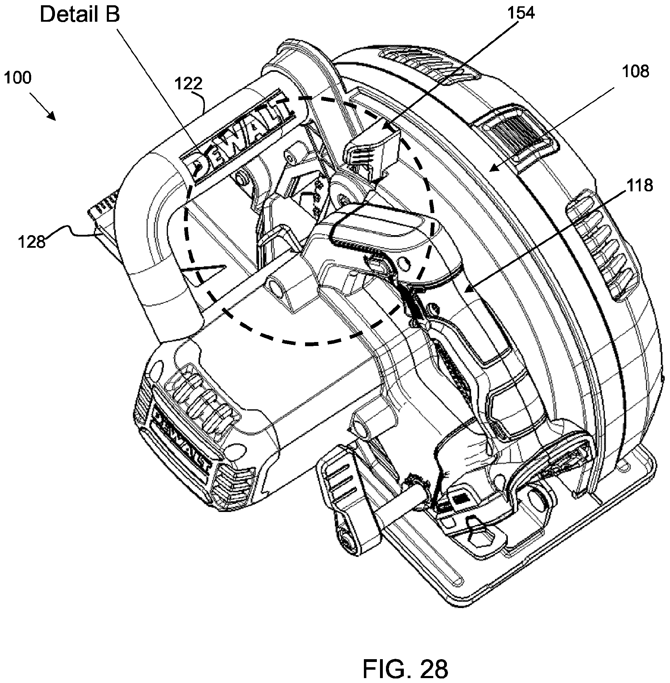

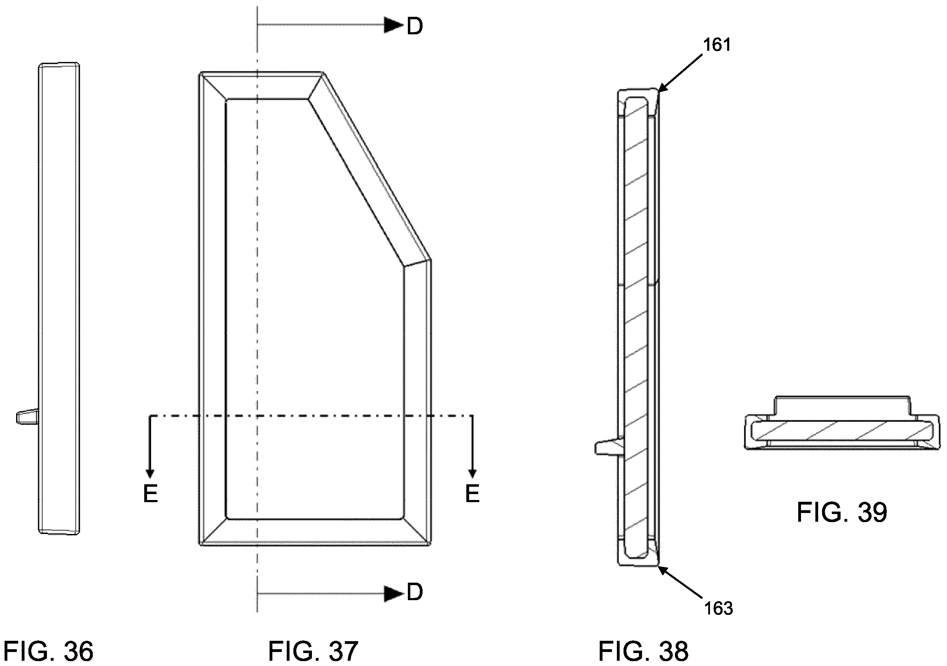

In an example, the circular saw 100 may include a window 124. For example, in FIG. 9 it may be seen that the upper blade housing 108 may include the window 124 on the motor facing side of the circular saw 100. The window 124 will be further discussed in the context of FIGs. 28-39 below.

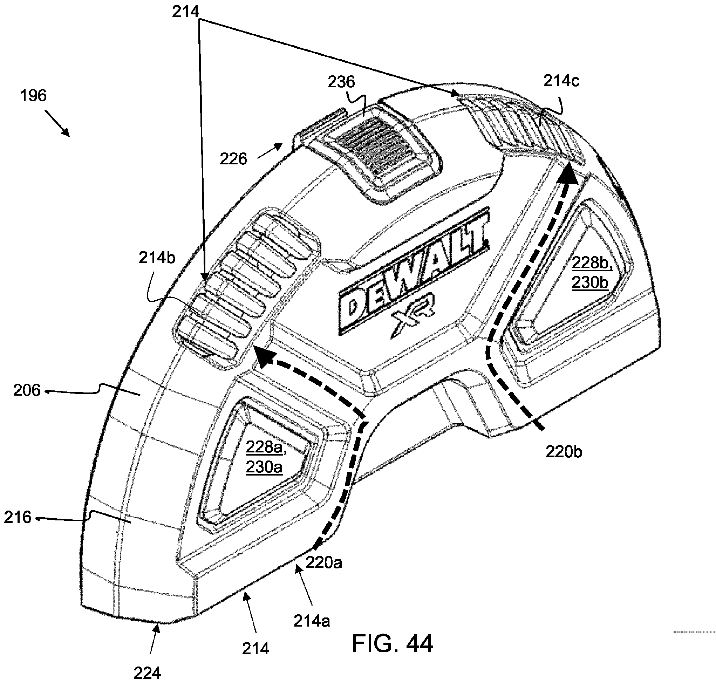

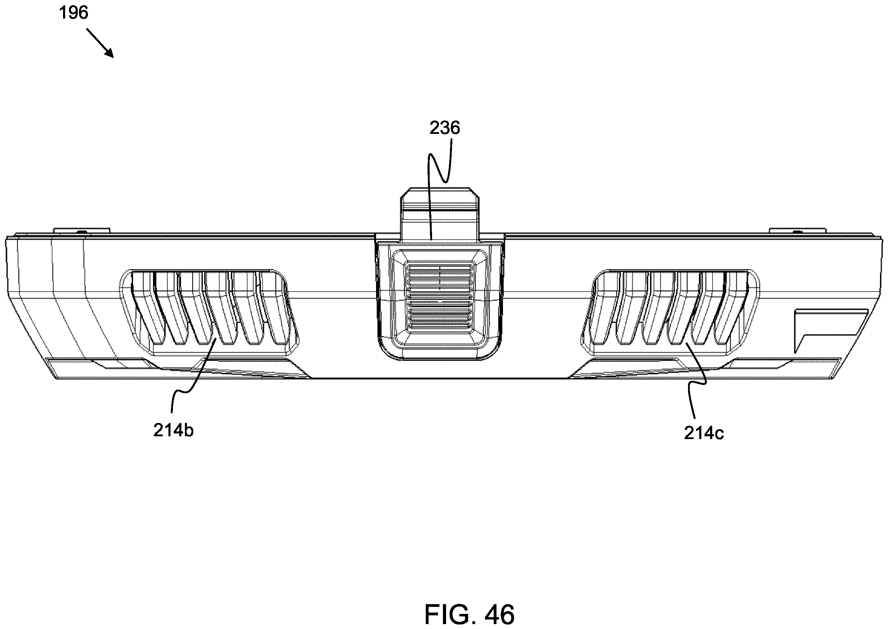

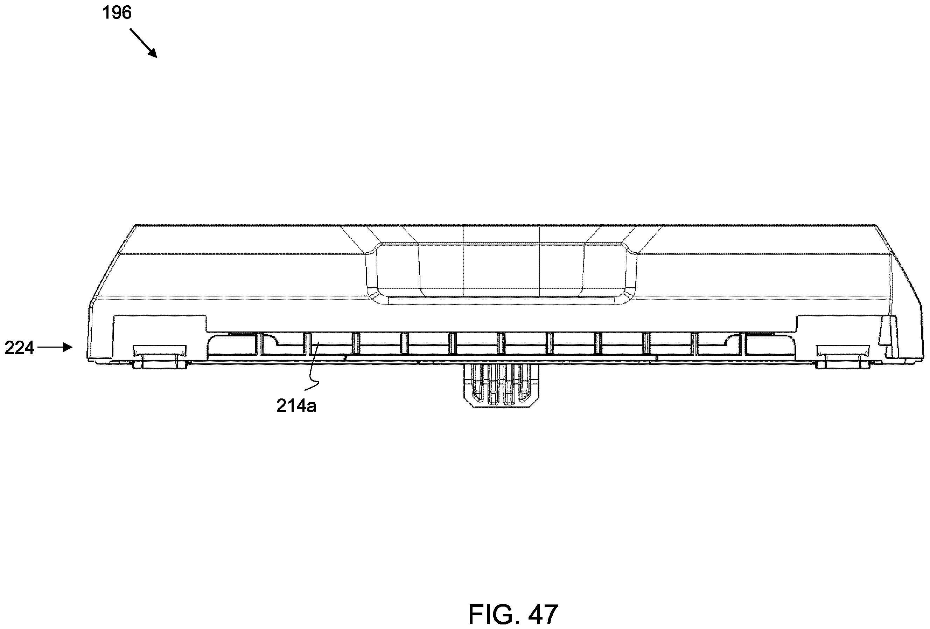

In an example, the circular saw 100 may include a chip collector 196, as may be seen, for example, in FIGs. 1-3, 5, 7-12, 16, and 17. The chip collector 196 may be operable to collect chips generated when the blade 112 cuts into a workpiece. The chip collector 196 may be coupled to or positioned adjacent to the upper blade housing 108 opposite the motor housing 102. The chip collector 196 will be further discussed in the context of FIGs. 44-50 below.

In an example, the circular saw 100 may further include a shoe 128. The shoe 128 may be operable to provide alignment between a workpiece and the blade 112 as the workpiece is being cut. For a straight cut, the shoe 128 may provide a right-angle alignment between a workpiece and the blade 112. In an example, the saw may be pivoted about an axis 129 at the front of the saw parallel to the output spindle 114 to adjust an angle between the shoe 128 and the output spindle 114 to provide different depths of cut through material.

As noted above, the circular saw 100 may include the first (primary) handle 118 and the second (secondary) handle 122. The first handle 118 includes the trigger 120 and is configured and positioned to move the circular saw 100 forward during a cutting application. As such, the user typically uses their dominant hand to hold the first handle 118 The second handle 122 is configured and positioned to provide additional stability for the user during a cutting application.

As noted above, the circular saw 100 may include the lower blade guard 110. The lower blade guard 110 may include a first side wall 110a (for example, an outer wall farther from the motor 103 relative to the blade 112) that is generally parallel to the blade 112 and a second side wall 110b, generally parallel to the first side wall 110a (for example, an inner wall closer to the motor 103 relative to the blade 112) that is also generally parallel to the blade 112 and a connecting wall 110c that connects the first side wall 110a and the second side wall 110b. The first side wall 110a, the second side wall 110b and the connecting wall 110c form a space or cavity 126 that receives the blade 112. Conventionally, the lower blade guard 110 may be retracted by a user by using the non-trigger hand to engage a finger/lever extending from the lower blade guard to rotate the blade guard. However, this requires the user to remove the second hand from the second handle 122, reducing control of the circular saw 100 and placing the second hand close to the blade 112, which may lead to injury of the second hand.

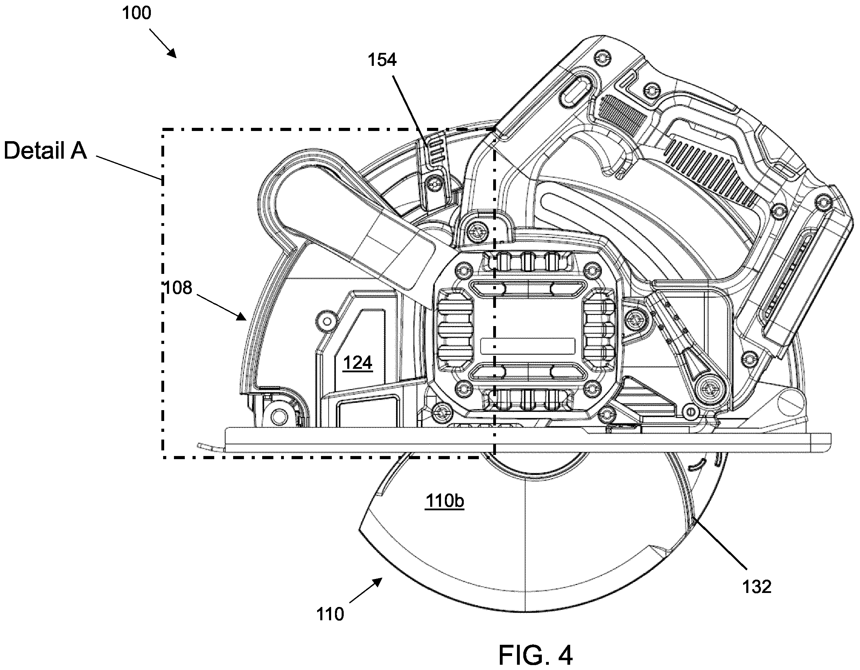

In order to address these concerns, the circular saw 100 may include a remote lower blade guard retraction system, sometimes simply referred to as a guard retraction system. As illustrated in FIGs. 4 and 18-24, the lower blade guard 110 may comprise a hollow disk-shaped or cylinder shaped movable enclosure configured to protectively sheath at least a portion of the blade 112. The lower blade guard 110 may include two outer walls: a first side wall 110a facing away from the motor housing 102 and a second side wall 110b facing towards the motor housing 102; Each of the side walls 110a, 110b may be substantially in a radial plane with respect to the motor spindle 104. The side walls 110a, 110b may cover a portion of the circle connected by a perimeter edge that extends an axial direction between the walls.

The lower blade guard 110 may be rotatably coupled to the blade housing 106 and operable to rotate about an axis 130 of the output spindle 114 to retractably cover a portion of the blade 112 not housed by the upper blade housing 108 of the blade housing 106. In an example, the output spindle axis 130 may be parallel with the motor spindle 104 (as is further describe with regards to the transmission 116 below).

The guard retraction system may include a guide track 132, which may be seen in FIGs. 18-24. The guide track 132 may comprise a ribbon-like track of material created when the lower blade guard 110 is cast. The guide track 132 may be positioned generally perpendicular to the second side wall 110b of the lower blade guard 110. In an example, a majority of the guide track 132 may be positioned away from a peripheral section of the second side wall 110b towards the motor 103. The guide track 132 may comprise a track of material that is additional to and separate from any peripheral edges of the first side wall 110a, the second side wall 110b or the connecting wall 110c (third wall). The guide track 132 may comprise a track of material that is connected on only one side of the second side wall 110b and does not connect the two side walls 110a, 110b. The guide track 132 may form a cam-shaped track in a plane that is radial to the motor spindle 104. The guide track 132 may form any shape that, when engaged by a lever 134 (retraction lever) may cause the lower blade guard 110 to rotatably retract, thereby unsheathing the blade 112.

The guard retraction system may further include the lever 134, simply referred to as "lever" hereafter. The lever 134 may include a central section 136. The central section 136 may include a through hole 138 for receiving a bushing 140. The bushing 140 receives a fastener 142, e.g., a screw, to rotatably attach/fasten the lever 134 to the upper blade housing 108 along a lever rotation axis 144. The fastener 142 is received in a fastening hole 146. The bushing 140 may include an annular exterior surface to make contact with the through hole 138. The bushing 140 may further include a first feature configured to mate with a second feature in the upper blade housing 108 (not shown) adjacent to the fastening hole 146 to serve as an anti-rotation feature. The first and second features may include one or more projections and recesses to prevent the bushing 140 from turning, which could cause the fastener 142 to back out of the fastening hole 146 within the upper blade housing 108 as the lever 134 is rotated. The guard retraction system may further include a lever spring 148 that may be positioned between the upper blade housing 108 and lever 134. In an example, the lever spring 148 may be a torsion spring biased to restore the lever 134 to a resting position. The lever spring 148 may be designed to provide a substantially level load with regards to deflection during operation of the guard retraction system. As such, the lever 134 may rotate about the lever rotation axis 144 during operation and be retracted upon release of the lever 134. The resting position of the lever 134 enables the lower blade guard 110 to be in the closed position.

The lever 134 may include a first arm 150 and a second arm 152. The first arm 150 may include a first end 150a at the central section 136 and a second end 150b, distal to the first end 150a. The second end 150b may include a user engagement cap 154 attached to the second end 150b of the first arm 150. The user engagement cap 154 includes an area configured for a user to engage with a thumb. As such, the second end 150b/cap 154 may be referred to as a user engagement end or user engagement area or user engagement element.

The second arm 152 may include a first end 152a at the central section 136 and a second end 152b, distal to the first end 152a. The second end 152b may include a track engaging element 156 configured to engage with the guide track 132. As such, the second end 152b of the second arm 152 may be referred to as a guide track engaging end 152b.

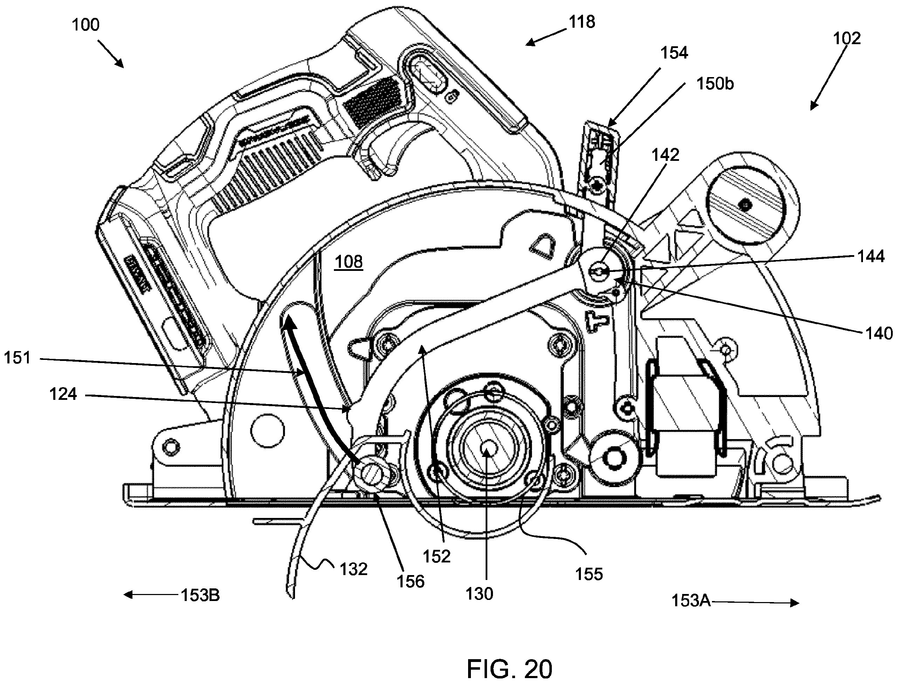

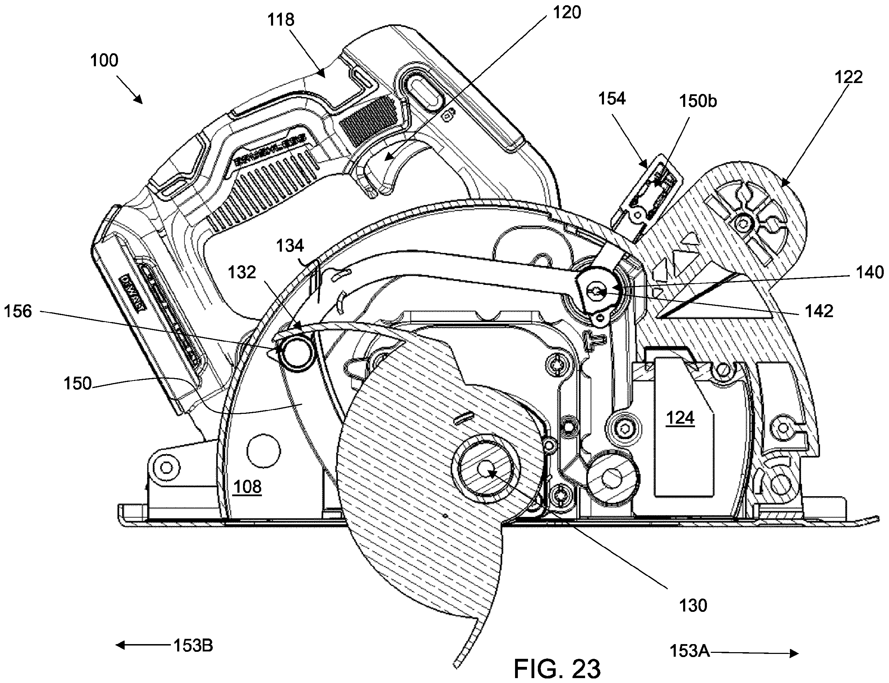

The lever 134 may be configured to engage the guide track 132 to rotate the lower blade guard 110 into an open position. The user engagement end 150b/154 of the lever 134 may pull up and/or apply an outward force to the guide track 132 away from the lever rotation axis 144 to rotate the lower blade guard 110 into the open position. For example, as is indicated by a track engagement member path 151 (indicated by an arrow in FIG. 20), rotation of the user engagement end 150b/154 about the lever rotation axis 144 rotates the guide track engaging end 152b in an upward direction (while the circular saw 100 is in an operational position) and away from the output spindle axis 130. In FIG. 23 it is illustrated that the user engagement end 150b/154 has traveled all the way through the track engagement member path 151 and come to rest against an outer edge of the upper blade housing 108.

The guide track engaging end 152b of the lever 134 may be configured to engage the guide track 132 at a trailing horizontal side 153B of the lever rotation axis 144 opposite a cutting horizontal side 153A of the lever rotation axis 144 (See FIG. 20). The cutting horizontal side 153A is in the horizontal direction of the cutting edge with respect to the lever rotation axis 144 when the circular saw 100 is in an operational position. The trailing horizontal side 153B is on the side of the lever rotation axis 144 opposite cutting horizontal side 153A. This may provide for increased retraction of the lower blade guard 110.

The track engaging element 156 may comprise a contact member 157 configured to engage the guide track 132. The contact member 157 may be attached to the second end 152b of the second arm 152 of the lever 134. For example, the contact member 157 may include a roller configured to glide along guide track 132. The contact member 157 (roller) may allow the lever 134 to drive the lower blade guard 110 into a more retracted position by engaging guide track 132 with minimal friction. In further examples, however, the contact member 157 may include any surface, including smooth surfaces intended to minimize the surface friction between the contact member and guide track 132.

The user engagement end 150b/154 may be configured for a user to push, thereby rotating the user engagement end 150b/154 through a range of motion. In further examples, however, the lever 134 and guide track 132 may be configured such that the user engagement end 150b/154 must be pulled back.

The user engagement end 150b/154 may extend outside of the blade housing 106. For example, as may be seen in FIG. 28, the user engagement end may include the user engagement cap 154 positioned outside of the upper blade housing 108 that is suitable for an operator to press upon with a thumb. If an operator is holding the first handle 118 with the right hand, and the second handle 122 the left-hand, the thumb of the left-hand may be used to press the user engagement cap 154 forward, thereby rotating the lever 134 and opening the lower blade guard 110.

The lever rotation axis 144 may be positioned closer to the user engagement end 150b/154 than the guide track engaging end 152b so that when an operator moves the user engagement end 150b/154 through a range of motion, the guide track engaging end 152b will move through a much greater range of motion than if the user engagement end 150b/154 and the guide track engaging end 152b were the same distance from the lever rotation axis 144. In an example, rotating the first arm 150 through a first rotation range of motion may rotate the lower blade guard 110 through a rotation range that is at least twice the first rotation range of motion. For example, FIG. 23 depicts the lower blade guard 110 rotated as far into an open position as it may be moved by moving the lever 134. In the example, the first arm 150 has been rotated 32° from a first position, as shown in FIG. 20 to a second position, as shown in FIG. 23, which in turn rotates the lower blade guard 110 by at least 68° from a first position, as shown in FIG. 20 to a second position, as shown in FIG. 23. In alternate examples having a guide track with a different shape, rotating the first arm 150 by 32° from a first position to a second position may rotate the lower blade guard 110 by 70° or more.

In an example, it may still be possible to open the lower blade guard 110 further. For example, the lower blade guard 110 may be pushed even further into an open position by a workpiece when it is being used for a cut, for example a crosscut, a rip cut, or a plunge cut.

In an example, a lower guard spring 155 may be positioned between the upper blade housing 108 and the lower blade guard 110 adjacent to the output spindle axis 130. The lower guard spring 155 may bias the lower blade guard 110 into a closed position. In the closed position, the lower blade guard 110 may be rotated so it is in a predominantly lower vertical position with respect to an operational position of the circular saw 100, thereby covering at least a substantial area of the blade 112. In an example, gravity may assist restoring the lower blade guard 110 to the resting position.

FIGs. 4, 13, 14, and 24 depicts a left side view of the circular saw 100 with the guide track 132 showing through the lower blade guard 110. The lower blade guard 110 in the figure is in a fully closed state.

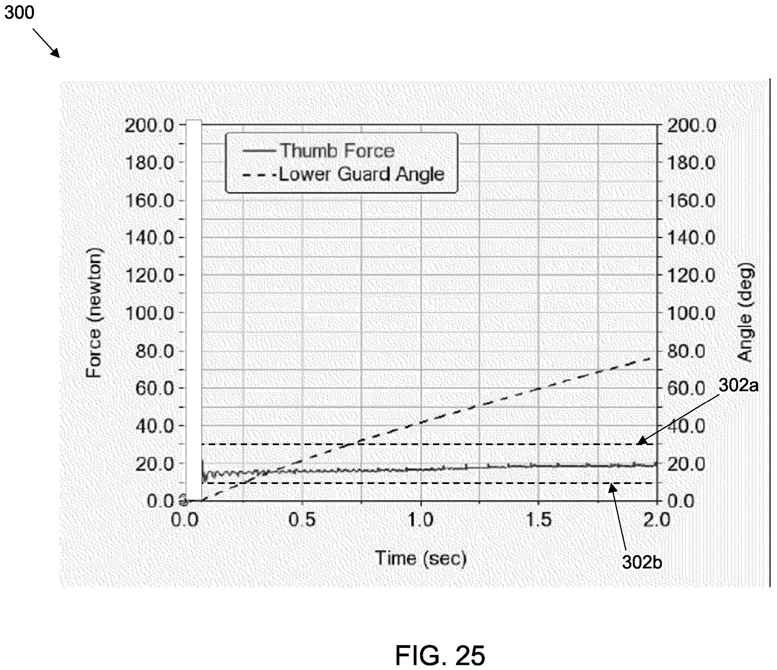

In an example, the lower blade guard 110 may be configured to rotate through a range of travel when it receives a minimum force. In an example, the lower blade guard 110 may be configured to rotate through a range of travel when a minimum of 15 to 25 newtons of force is applied to the user engagement end 150b/154. For example, turning to FIG. 25, a graph 300 depicts a thumb force in newtons applied to the user engagement end 150b/154 and an angle of the first arm 150 rotated as a function of time. In an example, the friction coefficient between the contact member 157 (roller) and the guide track 132 may be 0.1 in the graph 300. The left side of the y-axis represents force, in newtons, applied to the user engagement end 150b/154, and the right side of the y-axis represents a lower blade guard rotation angle, in degrees, in response to the force applied to the user engagement end 150b/154. The x-axis represents time, in seconds. The time base for the graph 300 is arbitrary, however.

In an example, the lower blade guard 110 may be configured to rotate at least 1.8° per Newton of thumb force applied to the user engagement end 150b/154 of the lever 134. In an example, the lower blade guard 110 may be configured to rotate at least 3.5° per Newton of thumb force applied to the user engagement end 150b/154 of the lever 134. This may allow a user to easily retract the lower blade guard 110 without having to place a hand on the lower blade guard 110 or use excess force.

In FIG. 25, it may be seen that the lower blade guard 110 is configured to rotate through a range of motion (as indicated by the right vertical axis) by applying a force to the user engagement end 150b/154 (as indicated by the left vertical axis) with a difference of no more than 20 newtons between a highest minimum force and a lowest minimum force needed to rotate the lower blade guard 110. The highest minimum force is the peak minimum force that must be applied to rotate the lower blade guard 110 and the lowest minimum force is the lowest minimum force required to rotate the lower blade guard 110 as it moves through its full range of motion enabled by the guard retraction system. The average thumb force applied to the user engagement end 150b/154 (as indicated by the graph 300) to achieve full retraction system retraction is approximately 18 N, or within ± 2 N of 18 N. The range between the minimum force and the maximum force is represented by the area between horizontal dotted lines 302a, 302b, and the lower blade guard angular range of travel in the graph 300 is approximately 68° or within ± 3° of 68°. By providing a relatively flat force curve, the forces a user experiences are minimized and may also provide a smoother, more controlled experience when opening the lower blade guard 110. In further examples, the difference between a highest minimum force and a lowest minimum force needed to rotate the lower blade guard 110 may be 15N, 17N, 22 N, or 25N.

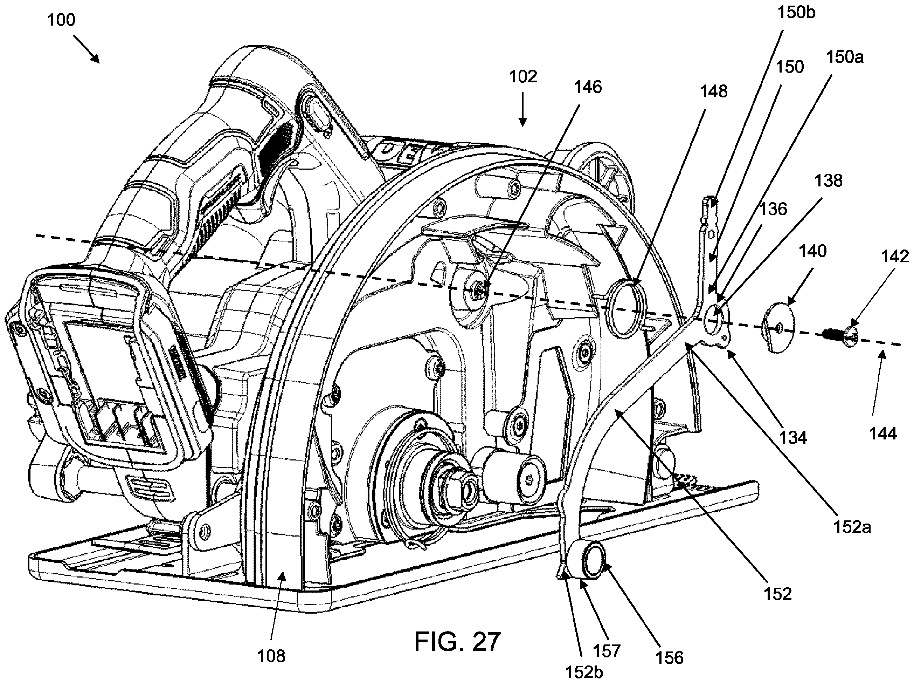

FIG. 27 provides an exploded view of the lever 134 and the mechanism by which the lever 134 is coupled to the blade housing 106.

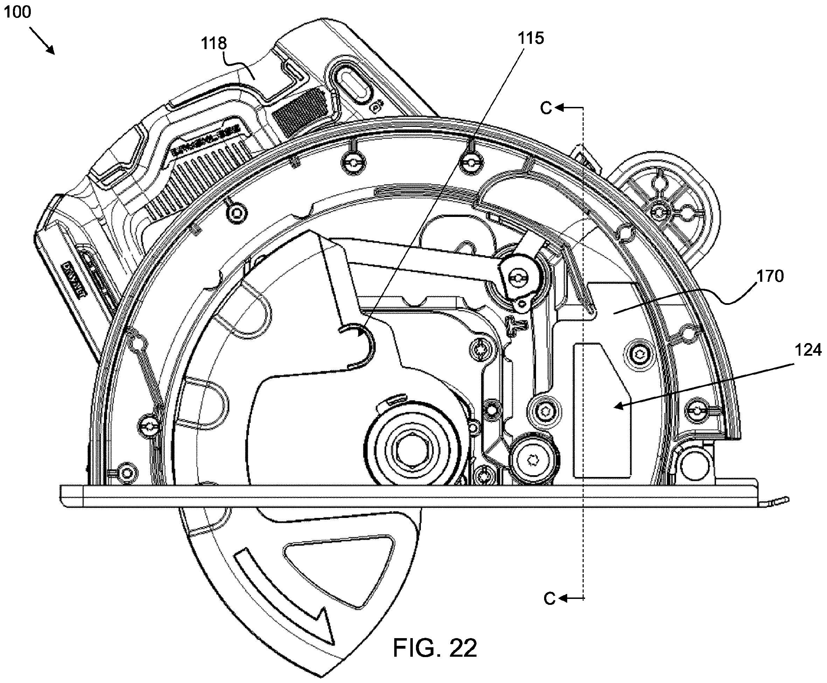

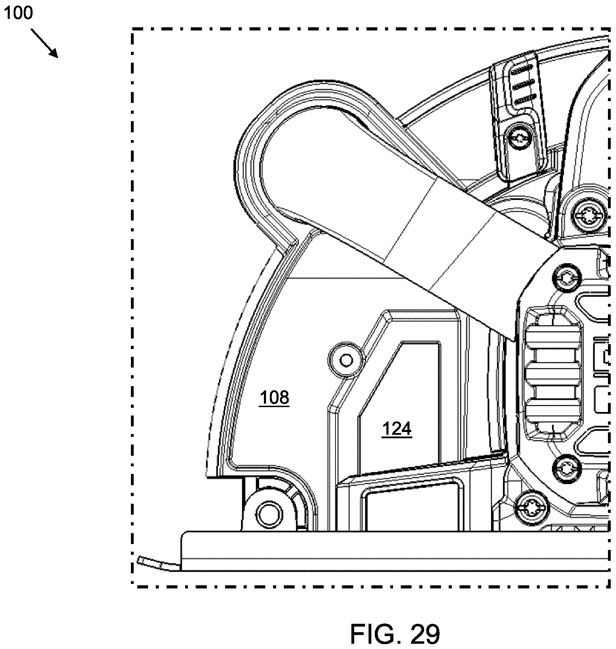

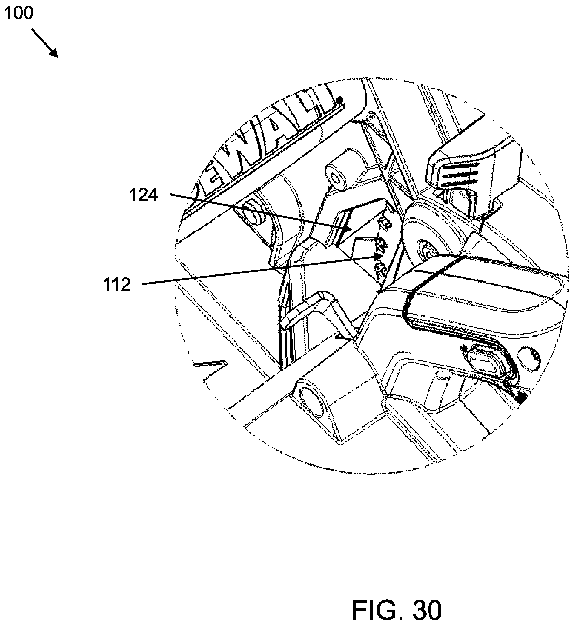

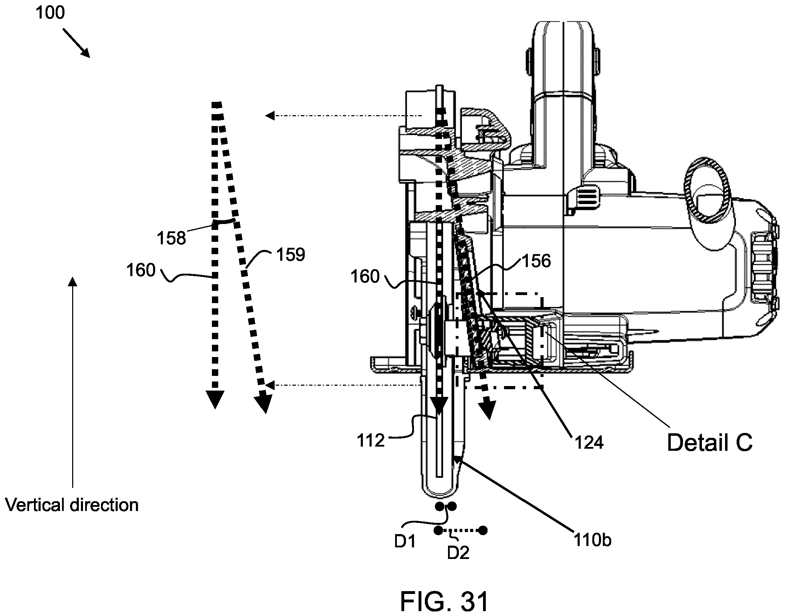

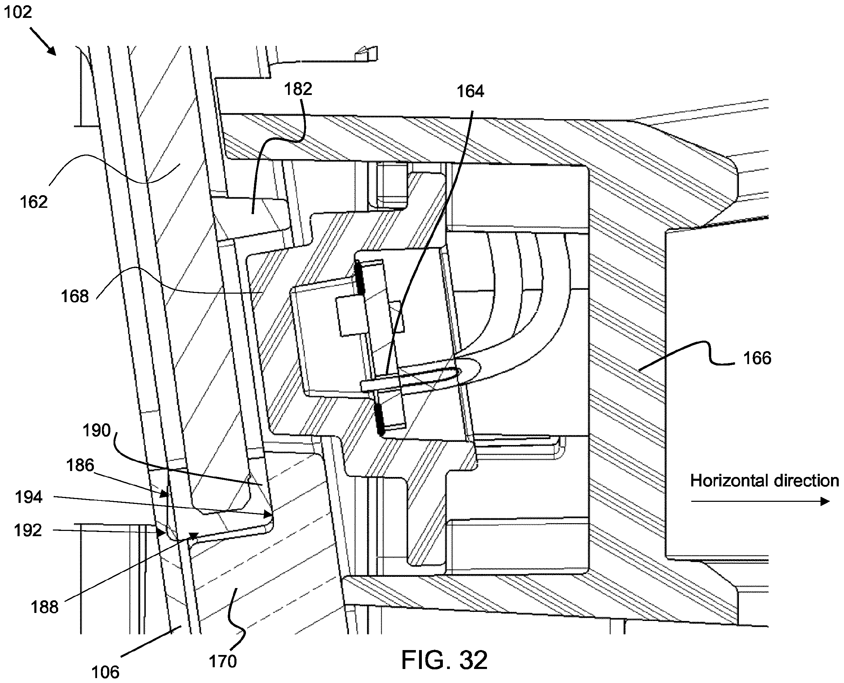

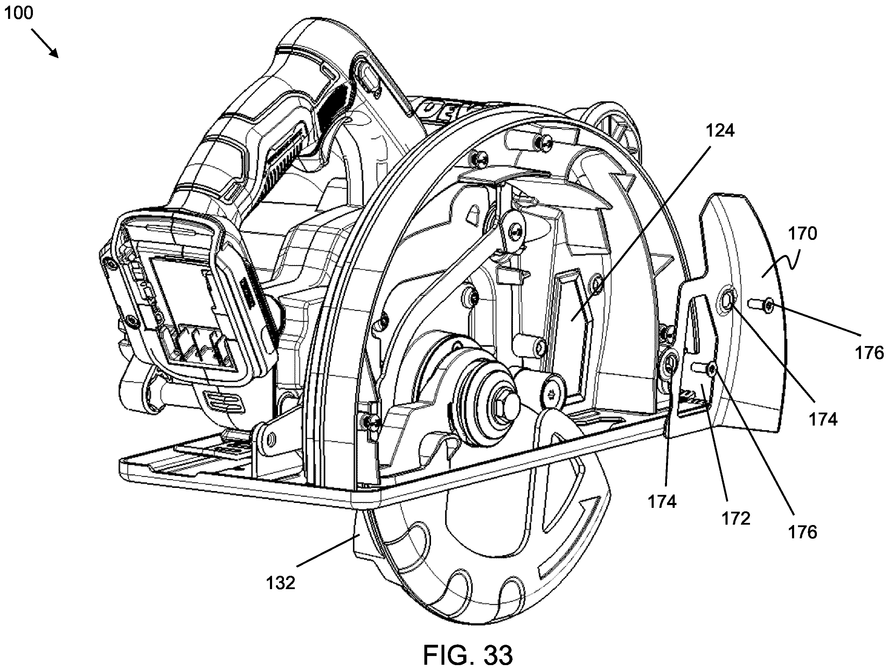

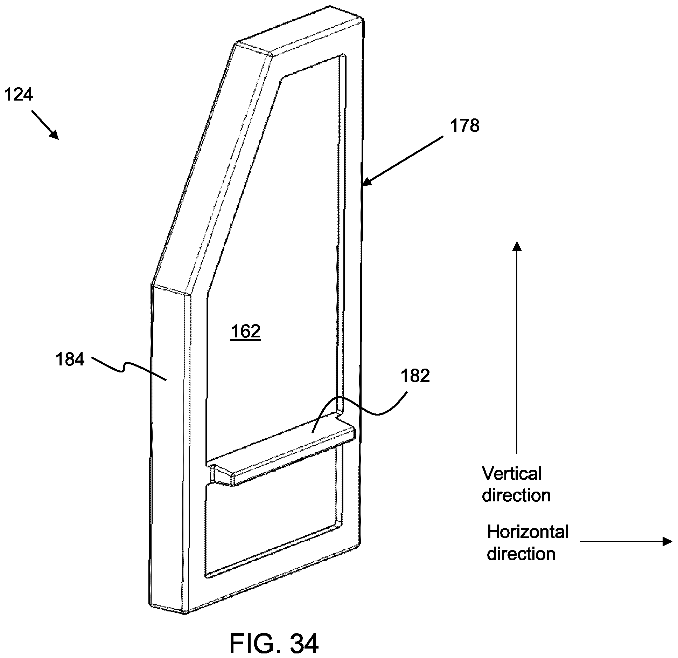

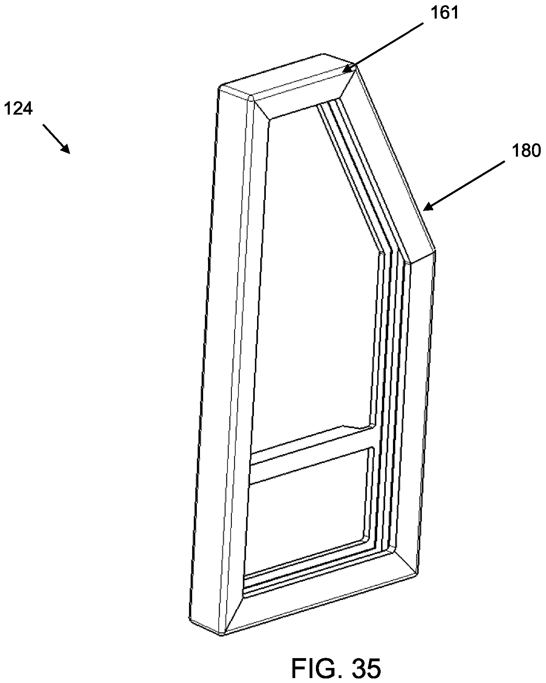

Referring to FIGs. 4, 9, and 28, it may be seen that the circular saw 100 may include the window 124. FIG. 29 depicts a detail of the window 124 from the perspective view of FIG. 4 and FIG. 30 depicts a detail of the window 124 from the operator's perspective view depicted in FIG. 28. FIG. 22 depicts the circular saw 100 with a portion of the upper blade housing 108 hidden and with the blade 112 removed so that the window 124 may be seen. FIG. 31 depicts a cross-sectional view along section line C-C of FIG. 22. FIG. 32 depicts a detail view of the window 124 from FIG. 31. FIG. 33 depicts an exploded view of a window assembly. FIGs. 34 and 35 depict isometric views of the window 124.

As discussed above, it may be difficult for an operator to see where the blade 112 meets a workpiece when using the circular saw 100 due to the blade housing 106 and the lower blade guard 110 around the blade 112. Therefore, the window 124 may be positioned in the blade housing 106 to provide a better view of the intersection of the blade 112 and the workpiece for the operator.

Turning to FIG. 31, it may be seen that the window 124 may be positioned in a window plane 159 of the blade housing 106 positioned at an angle 158 between 0 and 45 degrees with respect to a blade plane 160 including the blade 112. In an example, the angle 158 may be between 6 degrees and 10 degrees. In an example, the angle 158 may be approximately 8°. In an example, the angle 158 may be configured to maximize the visibility of the intersection between the blade 112 and the workpiece through the window 124. In an example, the angle 158 may be configured to maximize an efficiency of a trajectory of chips into a chip collector ramp (further discussed below) of the blade housing 106.

In an example, the blade 112 may be separated from the second wall 110b of the lower blade guard 110 by a first distance D1 on a first side of the blade 112. A top portion 161 of the window 124 is vertically aligned with the second wall 110b of the lower blade guard 110. A bottom portion 163 of the window 124 may be separated from the blade 112 by a second distance D2 which is greater than D1. The difference between the first distance D1 and the second distance D2 is a distance the bottom portion 163 of the window 124 is from the second wall 110b of the lower blade guard110. In an example, D1 may be approximately 0.412 inches and D2 may be approximately 0.746 inches. By configuring the window 124 such that the bottom portion 163 of the window 124 is farther from the blade 112 than the top portion 161 of the window 124 to create the angle 158 between the window 124 and the blade 112, it may be possible to increase the visibility of the blade 112 through the window 124 and make a more efficient chip path to a chip collector ramp.

An example window 124 may comprise a pane of glass 162. The glass may be laminated. Laminated glass may create a stronger window and prevent injury if the window 124 is broken by an impact.

Turning to FIG. 32, it may be seen that, in an example, the circular saw 100 may further include an illuminator 164 positioned on a side of the window 124 outside the blade housing 106. The illuminator 164 may be configured to radiate light towards the blade 112 and a workpiece. This may improve the visibility of the blade 112 and the workpiece for the operator. In an example, the illuminator 164 may be an LED light. In an example, the illuminator 164 may be positioned within an illuminator housing 166. By positioning the illuminator 164 on the side of the window 124 opposite the blade 112, it may be possible to avoid chips from damaging the illuminator 164.

In an example, a lens 168 may be positioned between the illuminator 164 and the window 124. In the figure, the lens 168 is integrated into a five-sided cover around the LED. In an example, the lens 168 may be a layer on a surface of the window 124. In other examples, the lens 168 may be integral to the illuminator housing 166. In examples, the lens 168 may help diffuse light or otherwise include features to reduce glare.

Turning to FIG. 33 it may be seen that, in an example, the window 124 may be retained between the blade housing 106 and a window retaining frame 170 coupled to the blade housing 106. In an example, the window retaining frame 170 may include an opening 172 configured to allow a substantial amount of the light passing through the window 124 to pass. The opening 172 within the window retaining frame 170 may be smaller than the window 124 in one or more directions, thereby allowing the window retaining frame 170 to retain the window 124 when fastened against the blade housing 106. In an example, the window retaining frame 170 may include one or more apertures 174 operable to allow a thread of one or more fasteners 176 to pass through the window retaining frame 170 and enable the window retaining frame 170 to be tightened against the blade housing 106.

FIG. 34 depicts a perspective view of a motor housing-side surface 178 of the example window 124, and FIG. 35 depicts a perspective view of a blade-side surface 180 of the example window 124.

The window 124 may further comprise a light baffle member 182 positioned across the pane of glass 162 along a horizontal dimension of the circular saw 100 in an operational direction. In an example, the light baffle member 182 may be positioned between the illuminator 164 and the blade 112. The light baffle member 182 on a side of the illuminator 164 opposite to a user and along a user's line of sight and therein is operable to prevent a glare from the illuminator 164, from interfering with an operator's view of the blade 112 and/or an adjacent workpiece.

As noted above the window 124 may comprise the pane of the glass 162. Referring to FIGs. 32 and 34-39, the window 124 may further comprise a viscoelastic circumferential seal 184. The viscoelastic circumferential seal 184 may, when secured against the blade housing 106 using, for example, the window retaining frame 170, prevent the glass 162 from vibrating within the blade housing 106. In an example, the viscoelastic circumferential seal 184 may further provide cushioning to protect the glass 162 in the event of an impact to the circular saw 100. The viscoelastic circumferential seal 184 and the light baffle member 182 may be formed from a single integrated piece of rubber.

FIG. 32 illustrates a cross-sectional view of an example viscoelastic circumferential seal 184. The viscoelastic circumferential seal 184 may include a channel-shaped cross-sectional profile having three sides - a first side 186 closest to the blade 112, a second side 188 closest to the shoe 128, and a third side 190 closest to the illuminator 164. The first side 186 and the second side 188 are connected at a joint 192 (sometimes also referred to as a corner or an edge). The joint 192 may be flared. The flared joint may best be seen in FIG. 32. The second side 188 and the third side 190 are also connected at a joint 194. The first side 186, the second side 188, and the third side 190 form a U-shaped profile that wraps around an edge of the glass 162. Any combination of the joint 192 and the joint 194 may be flared, meaning that the thickness of the viscoelastic circumferential seal 184 in these joints may be thicker than the viscoelastic circumferential seal 184 is at the first side 186, the second side 188 or the third side 190. The flare shape of the joint 192 and/or the joint 194 may be compressible between the blade housing 106 and the window retaining frame 170, thereby further securing and providing dampening protection to the glass 162.

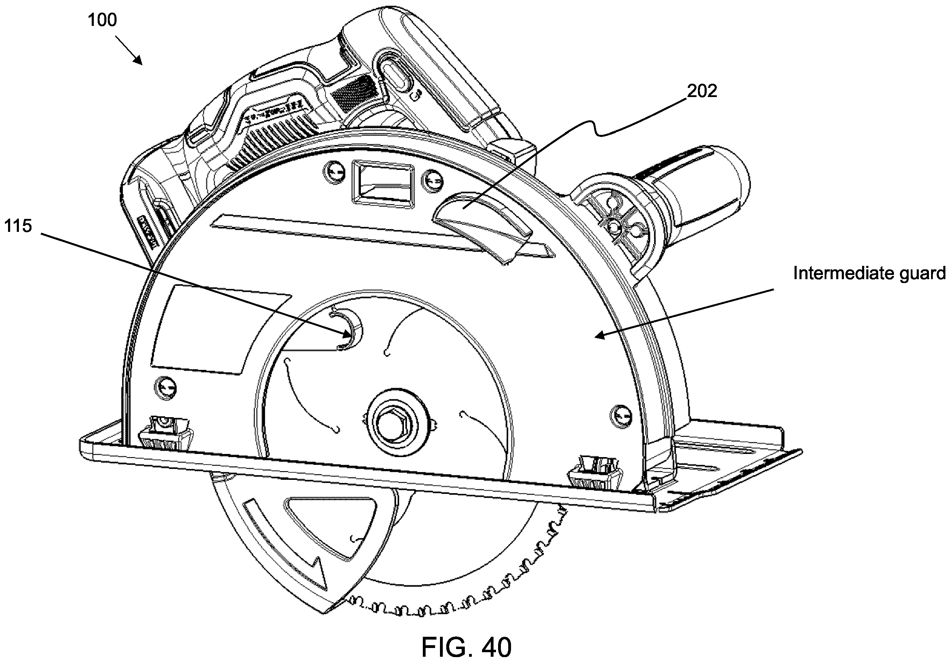

FIGs. 40-50 and the associated disclosure below describe a chip collector 196 with a passive cooling system, according to an example. Chip collectors for circular saws may include a metal housing that gets hot during use. However, allowing the metal housing to get hot may generate a thermal hazard for the motor.

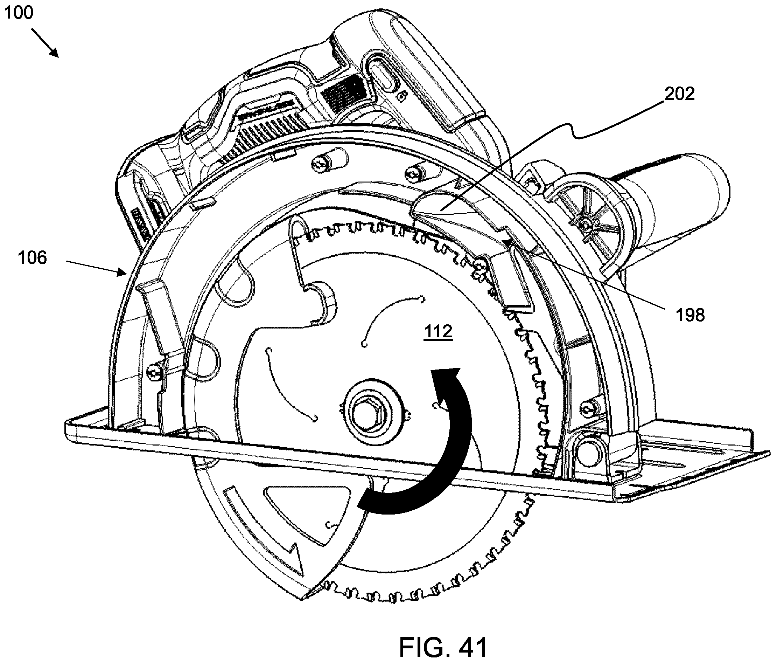

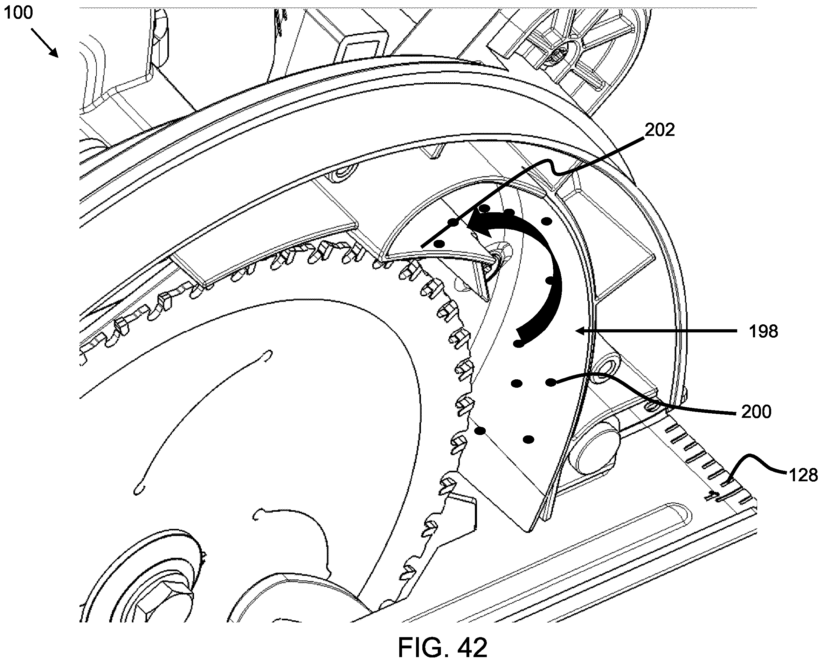

Returning to FIGs. 41 and 42, it may be seen that an example blade housing 106 may include a chip collector ramp 198 configured to receive chips 200 generated when the blade 112 cuts through a workpiece (not pictured). A counterclockwise rotational direction of the blade 112 is noted in the figure. By turning counterclockwise, the blade 112 will cut a workpiece and generate chips 200 that will be kinetically thrown upwards into the blade housing 106 from a workpiece under the shoe 128. The chips 200 will be funneled towards the chip collector ramp 198. In an example where the circular saw 100 includes the window 124, the angled surface of the window 124 may help kinetically guide the chips 200 towards the chip collector ramp 198, as described above. In an example, airflow generated by moving the blade 112 may help further kinetically guide chips 200 towards the chip collector ramp 198.

The chips 200 are depicted moving upwards along the chip collector ramp 198 from a workpiece below the shoe 128 to an exit 202 of the chip collector ramp 198. An arrow depicts the motion of the chips 200 through the chip collector ramp 198. In the example, the chip collector ramp 198 comprises a ribbon-like sheet of material, for example metal, that curves between the shoe 128 and the exit 202 and is oriented such that a surface of the ribbon-like sheet extends in a substantially circumferential direction relative the blade 112 and/or having a section that extends tangentially to the blade 112. The chip collector ramp 198 may be sandwiched between two substantially hemispheric covers of the blade housing 106. As the chips 200 move through the chip collector ramp 198, the width of the chip collector ramp 198 narrows in a direction parallel to an axis of the motor spindle 104 and moves the chips 200 towards the exit 202 and the chip collector 196.

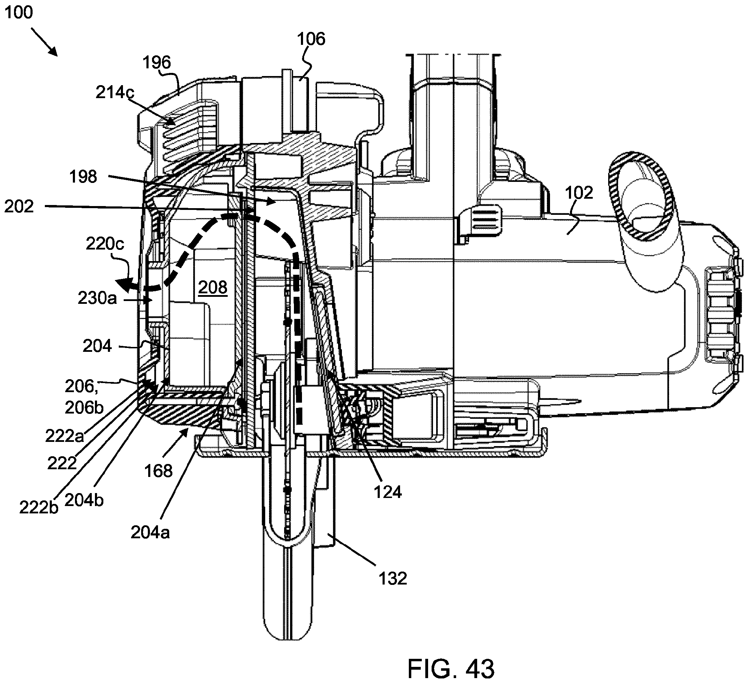

FIG. 43 depicts, from another angle, how the path of the chips 200 may be funneled through the blade housing 106, past the window 124 onto the chip collector ramp 198 and towards the exit 202.

FIGs. 44-50 depict further views of chip collector 196. As noted above, the chip collector 196 may include a chip container 204 and an outer housing 206. The chip container 204 may comprise a substantially closed container intended to house the chips 200 received from a cutting operation. In an example, the chips 200 may be hot and/or sharp when generated by making cuts on a workpiece. Circular saws can encounter problems when collecting the chips 200 when heat from the chips 200 causes the circular saw to become hot to the touch. Additionally, it is desirable to promote cooling of the circular saw 100 itself during cutting operations. Therefore, cooling the chips 200 and the circular saw 100 is highly desirable.

In an example, at least a portion of the chip container 204 comprises metal. For example, the chip container 204 may comprise magnesium. Using metal to fabricate the chip container 204 may further facilitate cooling.

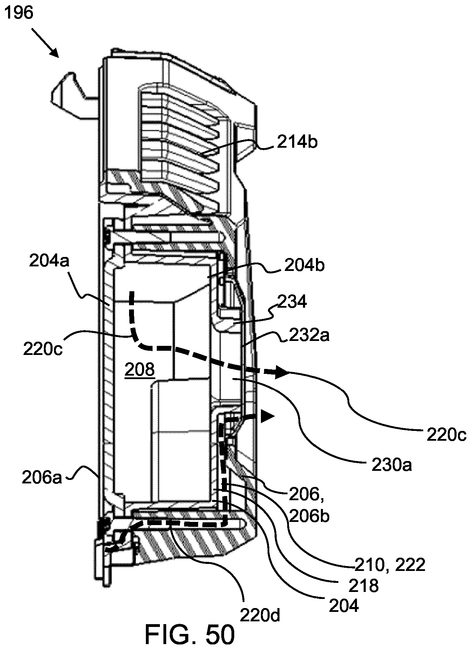

Turning to FIG. 50, it may be seen that, in an example implementation the chip container 204 may include the outer section 204b positioned to point outward from the circular saw 100 and the first inner section 204a positioned to be coupled to the blade housing 106 of the circular saw 100. The first inner section 204a and the outer section 204b may connect to form a cavity 208 within which chips 200 are collected. In further examples, however, the chip container 204 may be formed from different configurations of connecting and integrated sections to capture the chips 200.

The outer housing 206 may comprise a housing that substantially covers the outer section 204b of the chip container 204. In an example, the outer housing 206 may further cover the outer section 204b of the chip container 204. This may best be seen in the cross-section of the chip collector 196 depicted in FIG. 50. In an example, the outer housing 206 may include an outer section 206b positioned to point outward from the circular saw 100 and an inner section 206a positioned to be coupled to the blade housing 106 of the circular saw 100. The inner section 206a and the outer section 206b of the outer housing 206 may connect to form a cavity 210 within which the chip container 204 is positioned. In further examples, however, the outer housing 206 may be formed from different configurations of connecting and integrated sections.

The outer housing 206 may prevent an operator from having skin contact with the chip container 204. In an example, at least a portion of the outer housing 206 may comprise plastic. The chip container 204 and the outer housing 206 may include further features that promote cooling of the chip collector 196, as described below.

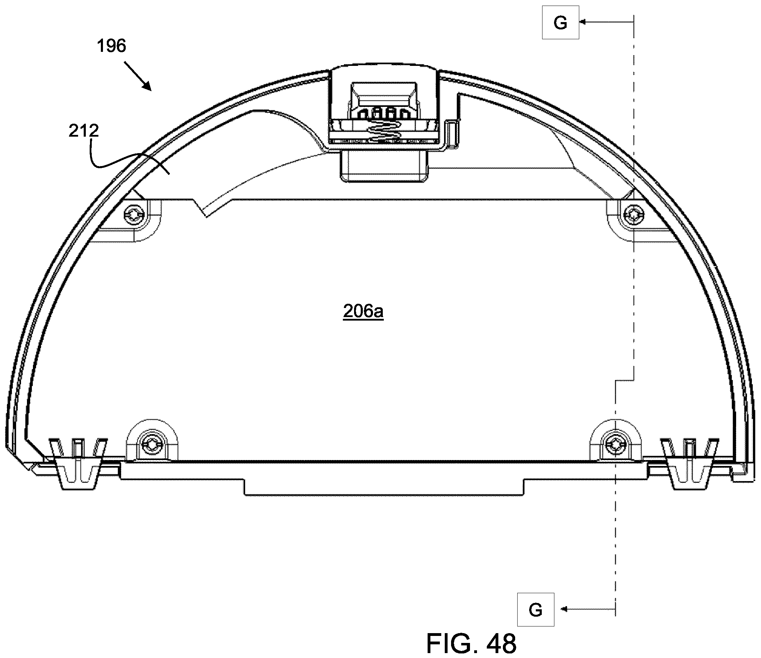

The chip collector 196 may include a chip entry port 212 coupled to the chip collector ramp 198. Turning to FIG. 48, it may be seen that the chip entry port 212 comprises an opening in the chip collector 196 which may be coupled to the chip exit 202 of the chip collector ramp 198 to allow the chips 200 to pass from the chip collector ramp 198 to the chip collector 196.

The outer housing 206 may include one or more vents 214, for example along an outer circumference 216 of the outer housing 206. The one or more vents 214 may be operable to promote an air flow through the chip collector 196 and across a face 218 of the outer section 204b of the chip container 204, thereby cooling the chip container 204.

The outer housing 206 may include a first vent 214a, and a second vent 214b. The first vent 214a and the second vent 214b may be fluidly connected via a first continuous air path 220a in a gap volume 222 between the chip container 204 and the outer housing 206 and positioned to provide passive cooling to the chip container 204. Passive cooling may comprise designing the first vent 214a, the second vent 214b, and the first continuous air path 220a to promote cooling by flowing air from the atmosphere through the first vent 214a through the gap volume 222 to the second vent 214b and back into the atmosphere without any mechanical means to move and/or circulate air. In an example, there may be no connections between the gap volume 222 and another air cavity of the circular saw 100. In other words, the gap volume 222 between the chip container 204 and the outer housing 206 may for all intents and purposes, only be in fluid communication with the atmosphere via the first vent 214a and the second vent 214b.

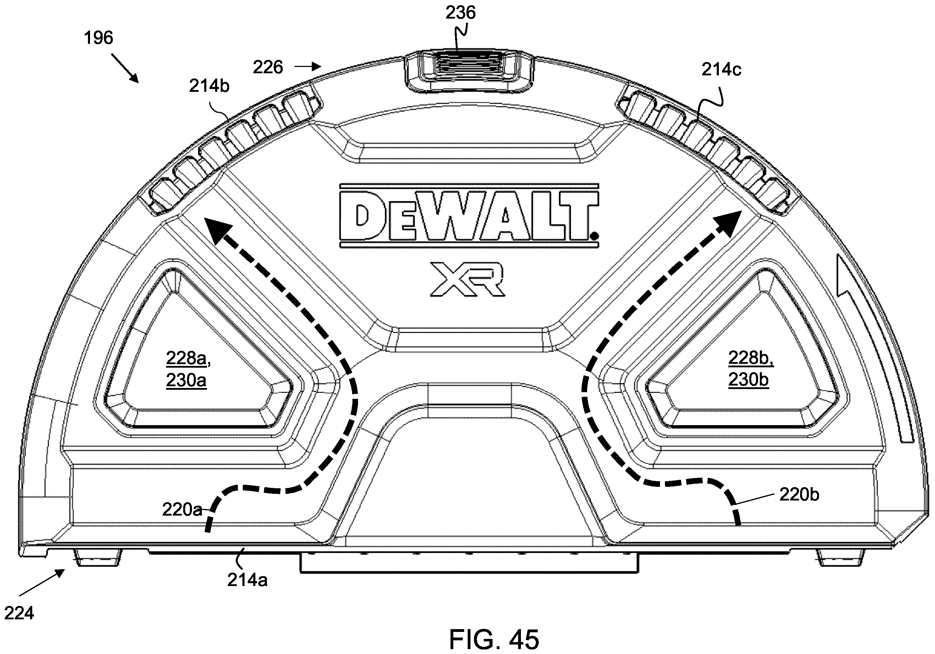

In another example, the outer housing 206 may include the first vent 214a at a lower end 224 ("lower" indicating closer to the shoe 128) and the second vent 214b and a third vent 214c at an upper end 226 ("upper" indicating farther from the shoe 128). The first vent 214a and the second vent 214b may be connected via the first continuous air path 220a in the first gap volume 222a between the chip container 204 and the outer housing 206. And, the first vent 214a and the third vent 214c may be connected via a second continuous air path 220b in a second gap volume 222b between the chip container 204 and the outer housing 206 The continuous air paths 220a, 220b may be best seen in the raised beveled areas of FIGs. 44 and 45 (air flow represented by dotted lines with arrows) and the gap volumes 222a, 222b may be best seen in FIG. 43. The gap volumes 222a and 222b may be formed as a single gap volume 222. The gap volume 222 is the volume between the chip container 204 and the outer housing 206. In an example, the gap volume 222 may comprise substantially all the volume between the chip container 204 and the outer housing 206. In further examples, the gap volume 222 may cover only some of the surface area of the chip collector 196 between the chip container 204 and the outer housing 206, as is further described below with regards to FIGS. 43-45 and 49.

By providing the first continuous air path 220a between the first vent 214a and the second vent 214b and the second continuous air path 220b between the first vent 214a and the third vent 214c , it may be possible to passively cool the chip collector 196 without requiring a fan or any sort of active cooling mechanism. Providing the gap volume 222 may also allow for an operator to handle the chip collector 196 with reduced burn danger.

In an example, the chip collector 196 may include one or more openings to provide ventilation to the cavity 208 of the chip container 204. For example, as may be seen in FIGs. 43-45 and 49, the outer housing 206 may include a first opening 228a and a second opening 228b. As may be further seen in FIG. 50, the first opening 228a of the outer housing 206 may be aligned with a corresponding first outside opening 230a in the chip container 204. The second opening 228b of outer housing 206 may be aligned with a corresponding second outside opening 230b in the chip container 204 (not pictured). In an example, the chip collector 196 may include additional openings as well.

The first opening 228a of the outer housing 206 and the first outside opening 230a of the chip container 204 may be configured to provide ventilation to the cavity 208 of the chip container 204 through the outer housing 206. The first opening 228a of the outer housing 206 and the first outside opening 230a of the chip container 204 may allow for the chips 200 inside the chip container 204 to cool by allowing hot air from inside the chip container 204 to pass out of the chip collector 196 via a third continuous air path 220c. In an example, as may be seen in FIG. 43, the blade 112 may drive air through the chip collector 196 via the third continuous air path 220c. The third continuous air path 220c may flow from either side of the blade 112 through the chip collector ramp 198 through exit 202 into the chip container 204, across any accumulated chips 200 and out of the openings 228a, 230a. By providing the openings 228a, 230a, it may be possible to both cool and depressurize the chip container 204, thereby providing better chip collection function. The air path 220c illustrated in FIG. 43 generally illustrates the path of the airflow, as described above.

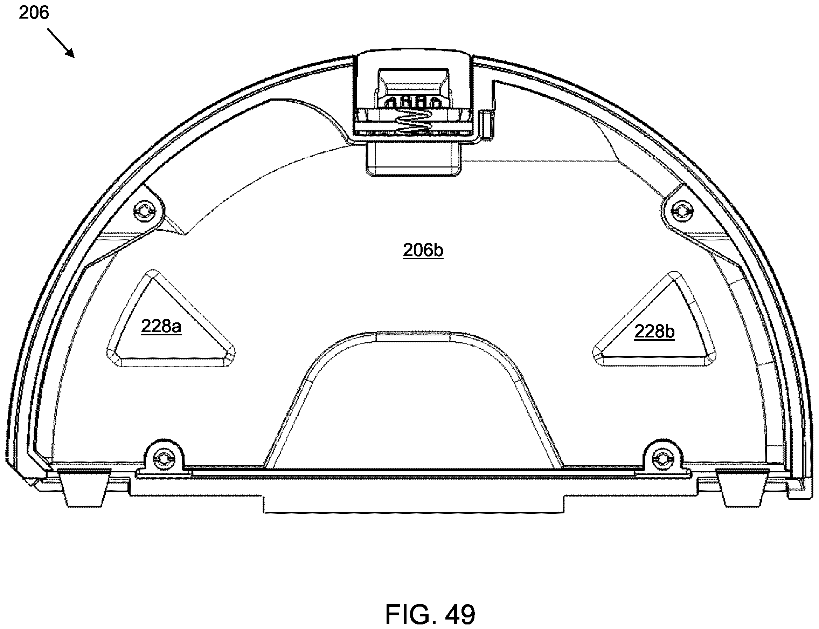

In an example, the chip collector 196 may include a first screen 232a positioned over the first opening 228a of the outer housing 206. The first screen 232a may allow for the flow of air out of the chip container 204 while preventing chips 200 from escaping. This may best be seen in FIG. 49. The chip collector 196 may include a second screen (not illustrated), similar to the first screen 232a, positioned over the second opening 228b of the outer housing 206.

In an example, the first screen 232a may be further positioned between the first opening 228a of the outer housing 206 and the first outside opening 230a of the chip container 204. The first outside opening 230a of the chip container 204 may include a lip 234 around a perimeter of the first outside opening 230a. The lip 234 may further be seen in FIG. 50. The lip 234 creates a raised area which may extend towards and exterior to the outer housing 206. The portion of the first screen 232a that is positioned between the first opening 228a of the outer housing 206 and the first outside opening 230a of the chip container 204 may allow for further venting in the air space between the chip container 204 and the outer housing 206. The second screen may be positioned between the second opening 228b of the outer housing 206 and the second outside opening 230b of the chip container 204 in a manner similar to the first screen 232a.

In another example, a portion of the first screen 232a positioned between the first opening 228a and the first outside opening 230a may enable a fourth continuous air path 220d (see FIG. 50) with another vent, for example a combination of the first vent 214a and the second vent 214bto provide further cooling of the chip container 204. In this way, the first screen 232a may support two independent pathways of venting within the chip collector 196.

In an example, the first screen 232a may be insert-molded onto the outer housing 206. In further examples, the first screen 232a may be riveted or fastened to the outer housing 206. The first screen 232a may comprise a metal screen, for example. When the first screen 232a is coupled between the outer housing 206 and the chip container 204, the first screen 232a may be tensioned over the lip 234, thereby holding the first screen 232a taught when the outer housing 206 is secured over the chip container 204.

In an example, the first outside opening 230a of the chip container 204 may be positioned in the middle third of the chip collector 196 in a vertical dimension when the circular saw 100 is in an operating position to allow air flowing out of the first outside opening 230a of the chip container 204 the greatest chances of passing directly over the chips 200, which may provide further cooling of the chips 200.

In an example, the first continuous air path 220a, the second continuous air path 220b, and the third continuous air path 220c may be separate or combined within the gap volume 222. In an example, the first continuous air path 220a, the second continuous air path 220b, and the fourth continuous air path 220d may not intermingle with the air exiting the first outside opening 230a of the chip container 204. In this way, the chip collector 196 may provide multiple cooling mechanisms.

In an example, the first continuous air path 220a, the second continuous air path 220b, and/or the fourth continuous air path 220d between the outer housing 206 and the chip container 204 may be independent of the third continuous air path 220c. This may provide a dual passive heat dissipation system for the chip collector 196.

In an example, the outer housing 206 may further include a coupler/latching mechanism (or simply a latch) 236 between the second vent 214b and the third vent 214c operable to couple the chip collector 196 to the blade housing 106. In the example of the circular saw 100, the coupler 236 includes a spring latch operable to hook into the blade housing 106.

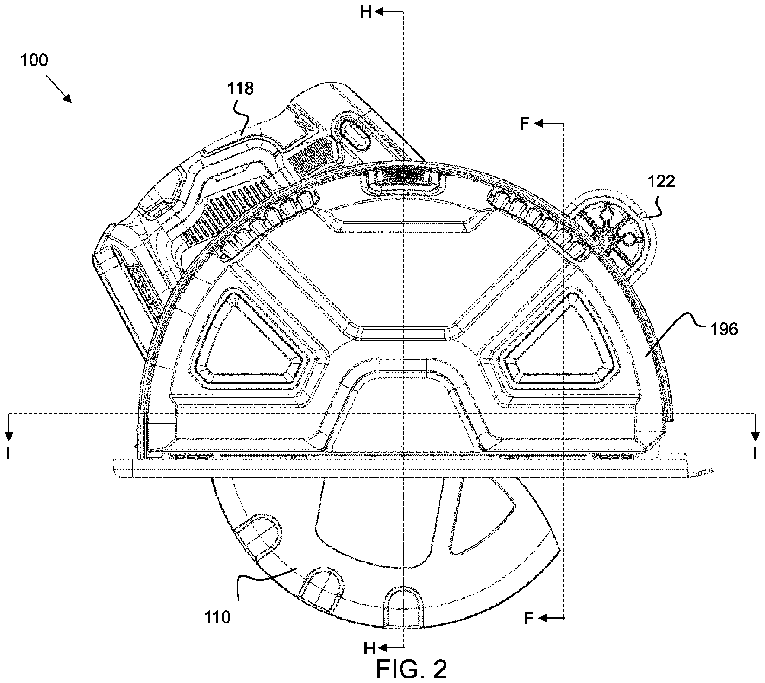

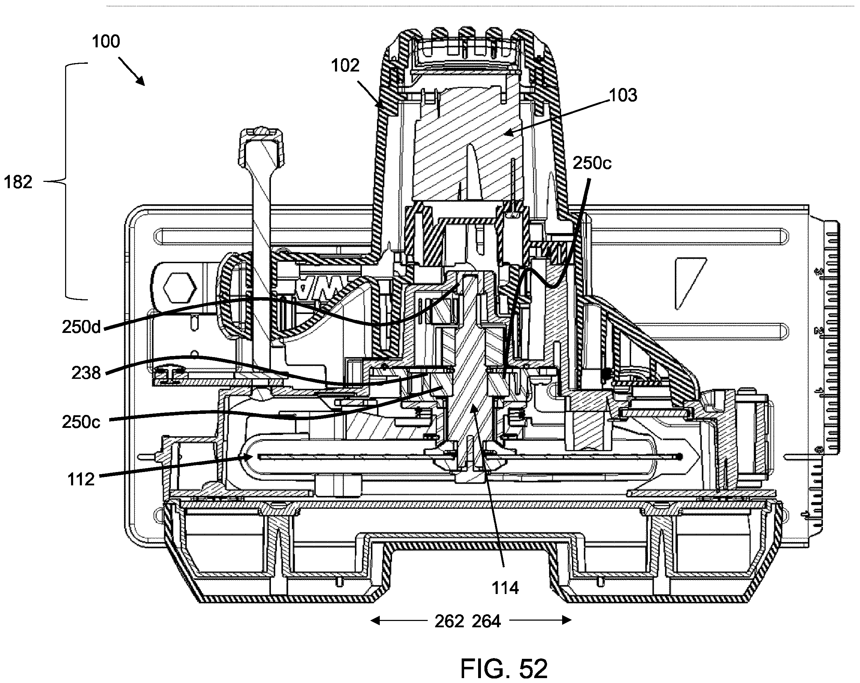

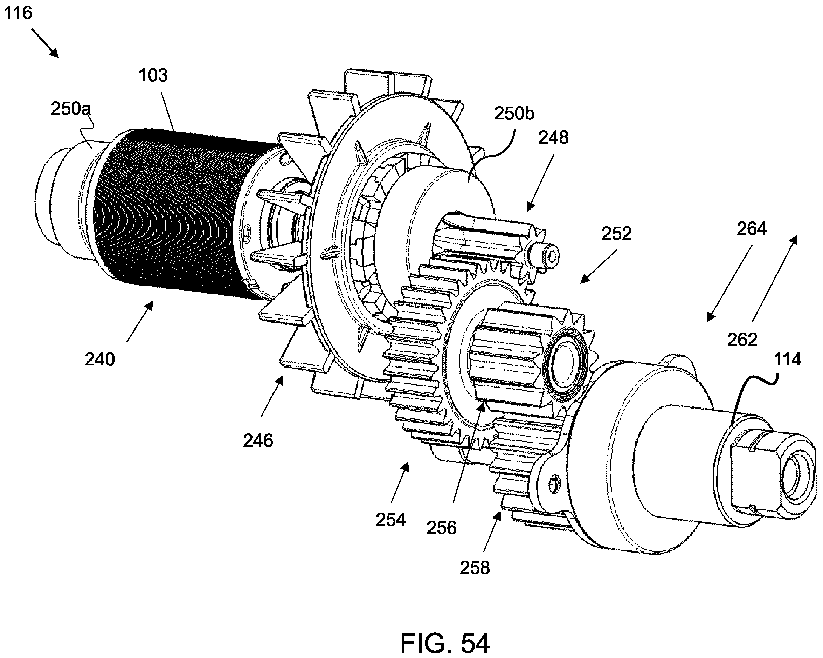

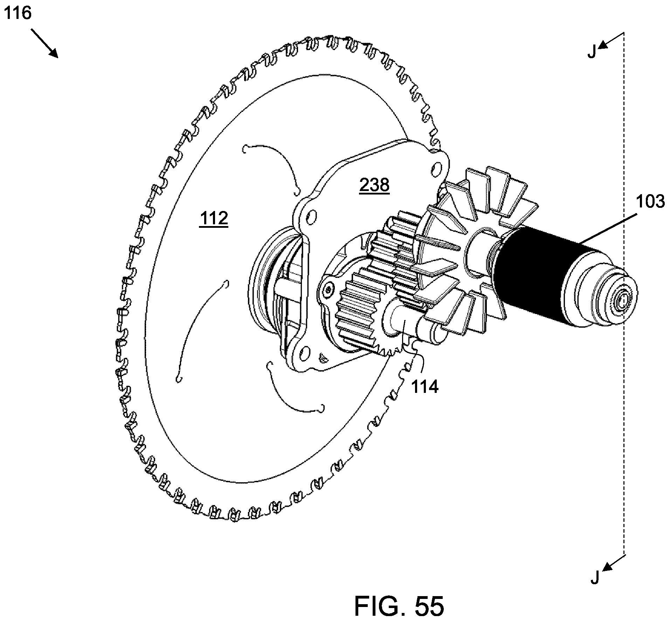

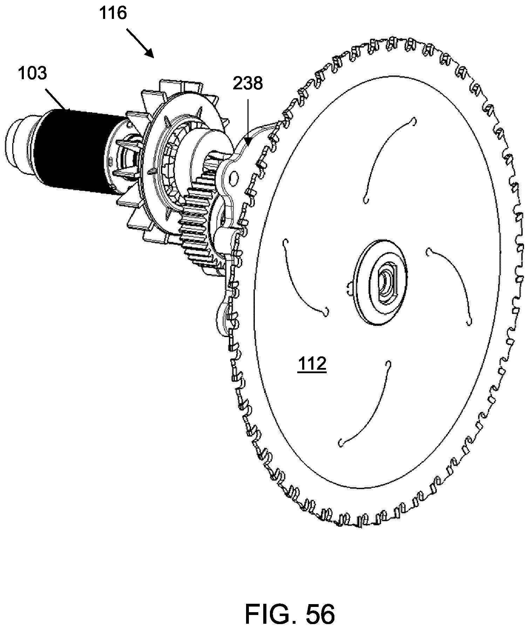

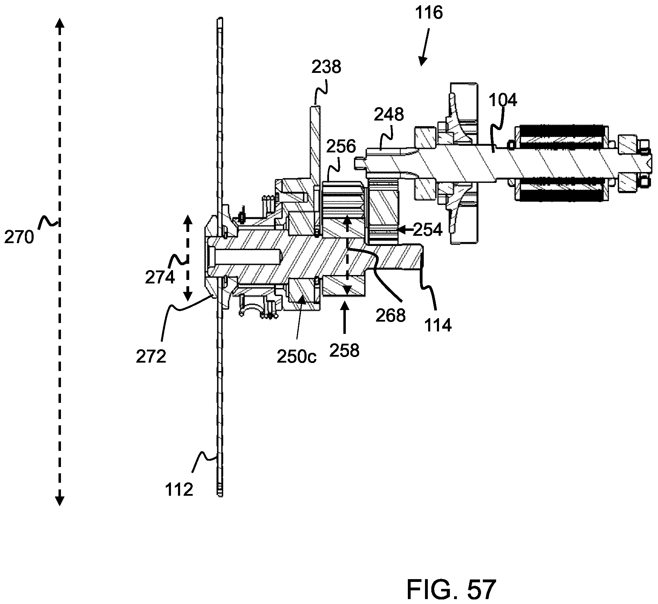

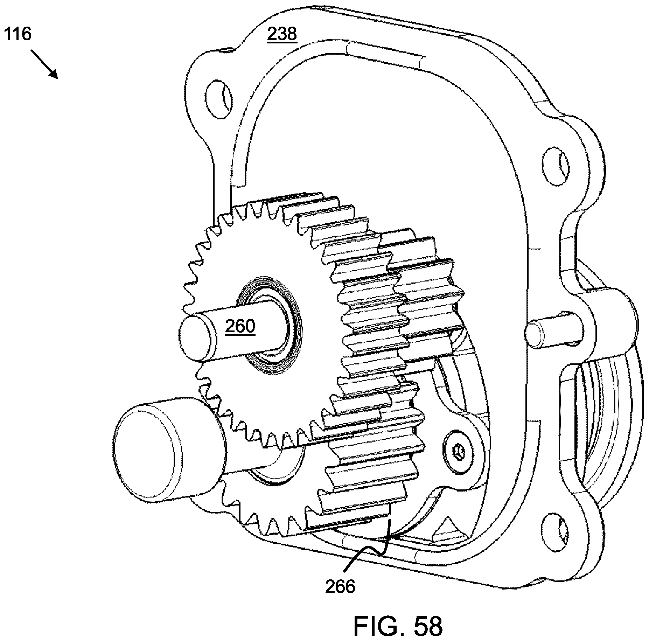

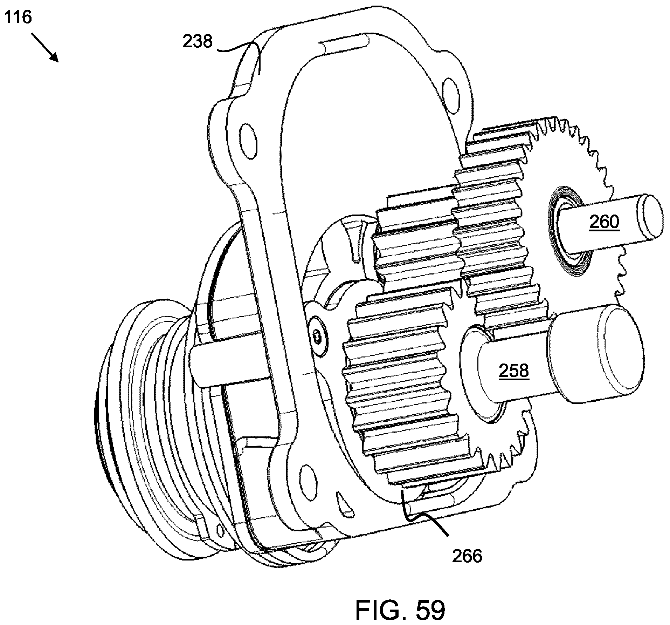

FIGs. 51-59 depict an example transmission 116 in accordance with the present disclosure. The transmission 116 may be used to increase the depth of cut and increase the robustness of the circular saw 100. The transmission 116 may further improve the ability of an operator to see the alignment of the blade 112 to a workpiece. FIG. 51 depicts a cross-sectional view of the circular saw 100 along section line H-H of FIG. 2. FIG. 52 depicts a cross-sectional view of the circular saw 100 along section line I-I of FIG. 2. FIG. 53 depicts a front, right side isometric view and FIG. 54 depicts a rear, right side isometric view of the transmission 116. FIG. 55 depicts a front, left side isometric view, FIG. 56 depicts a rear, right side isometric view, and FIG. 57 depicts a cross-sectional view along section line J-J of FIG. 55 of the transmission 116 with the blade 112 attached. FIGs. 58 and 59 depict isometric views of the transmission 116 coupled to a blade housing mounting plate 238.

The blade housing 106 may at least partially house the transmission 116. The transmission 116 may be used to transmit power from the motor 103 to the blade 112. Especially in applications where the circular saw 100 will be cutting metal, a slower output speed is preferred as compared to an output speed needed to cut wood. For example, while a speed of 5500 RPMs may be desirable for a circular saw to cut wood, for a metal saw a speed of 3900 RPM may be more desirable to avoid dulling the edge of the blade 112.

The motor housing 102 may at least partially house the motor 103. As may be seen in FIG. 51, the motor 103 may include a rotor 240 positioned on the motor spindle 104 and a stator 242 positioned within the motor housing 102. A fan 246 may be further positioned between the rotor 240 and a first stage pinion 248. The motor spindle 104 is coupled to the motor housing 102 via a first bearing 250a and a second bearing 250b.

In order to support lower rotational speeds for the blade 112 using the motor 103, a circular saw used to cut metal may need a higher gear ratio between a motor spindle and an output spindle than a circular saw used to cut wood. If the gear ratio is too large, however, reliability may become a problem. For these reasons, a one-stage transmission may be less reliable for cutting metal.

There is also a strong desire to increase the depth of cut over prior circular saws. Prior circular saws provide a 2 9/16 inch depth of cut for a for a blade size varying from 7.22 inches to 7.99 inches. Increasing this depth of cut by 1/16 of an inch to 2 5/8 inches is strongly desired. One of the biggest limiting factors to getting increased depth of cut is the diameter of the output gear on an output spindle. A single stage transmission is limited in its depth of cut because it requires using a large output gear on the output spindle 114 that spins a blade.

The design of the transmission 116 maximizes the depth of cut of the circular saw 100, while achieving the slower blade speeds desired for metal cutting applications and maximizing the robustness of the saw.

Turning to FIG. 53, it may be seen that the transmission 116 may include an intermediate gear 252 that transfers power between the motor 103 and the output spindle 114, making the transmission 116 a two-stage transmission. The intermediate gear 252 includes a first stage gear 254 and a second stage pinion 256. The first stage gear 254 may be configured to engage the first stage pinion 248 which is located at an end of the motor spindle 104, and the second stage pinion 256 may be configured to engage an output gear 258 on the output spindle 114.

In an example, the first stage pinion 248 may have 8 teeth, the first stage gear 254 may have 33 teeth, the second stage pinion 256 may have 13 teeth, and the output gear 258 may have 21 teeth.

In an example, the intermediate gear 252 may rotate on a fixed pin 260 (as may be seen in FIGs. 58, and 59). The fixed pin 260 may be coupled to a blade housing mounting plate 238 at a first end and the motor housing 102 at another end. The blade housing mounting plate 238 may be best seen in FIGS. 55, 57, 58, and 59 and will be further described below. In an example, the fixed pin 260 may not rotate. Instead, the intermediate gear 252 may be rotatably coupled to the fixed pin 260 via a needle bearing (not pictured). In an example, the fixed pin 260 may act as a locating feature for the gear case cover. Press fit bushings may be used to support the fixed pin 260, acting as axial wear members.

In an example, the intermediate gear 252 may be positioned at a trailing end 262 of the motor spindle 104 opposite a cutting end 264 of the circular saw 100 in a horizontal dimension when the circular saw is in an operational position. The blade 112 may be coupled to the output spindle 114.

Placing the intermediate gear 252 behind the motor spindle 104 (towards the trailing end 262 of the circular saw 100) may allow for improved positioning of the window 124, and therefore improved line of sight between an operator using the circular saw 100, the blade 112 and the workpiece through the window 124.

Turning to FIG. 52, it may be seen that the output spindle 114 may be coupled to the motor housing 102 via a third bearing 250c. In an example, the third bearing 250c may be slip fit to the blade housing mounting plate 238. The third bearing 250c may be coupled to the motor housing 102 via a coupler 266 (see FIG. 58). The output spindle 114 may be further coupled to the upper blade housing 108 via the fourth bearing 250d, which may be press fit into the upper blade housing 108 (see FIG. 42).

Turning to FIG. 57, it may be seen that, in an example, the output gear 258 may have an output gear diameter 268 (sometimes also referred to as the outside diameter of the gear) that is less than or equal to approximately 20% of a blade diameter 270 of the blade 112. By approximately 20%, what may be meant is within ± 2% of 20%. In further examples, the output gear 258 may have an output gear diameter 268 that is less than or approximately equal to 16.5% of the blade diameter 270. By approximately 16.5%, what may be meant is within ± 2% of 16.5%. By providing a low output gear diameter to blade diameter ratio, it may be possible to increase the cut depth of the circular saw 100.

In an example, the blade 112 may be coupled to the output spindle 114 via a flange 272 having a flange diameter 274 that is 0.072 inches larger than the output gear diameter 268 of the output gear 258. This may further help provide increased depth of cut for the circular saw 100.

In an example, the blade 112 may comprise a blade diameter 270 of 7 1/4 in. and the circular saw 100 may be operable to generate a depth of cut of 2 5/8 in.

In some aspects, the techniques described herein relate to a circular saw including: an upper blade housing; a lower blade guard coupled to the upper blade housing, the lower blade guard rotates about an axis and includes a guide track, and a lever having a guide track engaging end and a user engaging end, the lever coupled to the upper blade housing at a lever pivot point positioned between the guide track engaging end and the user engaging end, the guide track engaging end including a contact member configured to engage the guide track to rotate the lower blade guard.

In some aspects, the techniques described herein relate to a circular saw, wherein the user engaging end includes a movable lever positioned exterior to the upper blade housing.

In some aspects, the techniques described herein relate to a circular saw, wherein the contact member is configured to pull up on the guide track or apply an outward force to the guide track.

In some aspects, the techniques described herein relate to a circular saw, wherein the contact member engages the guide track at a trailing horizontal side of the lever pivot point opposite a cutting horizontal side of the lever pivot point.

In some aspects, the techniques described herein relate to a circular saw, wherein the lower blade guard is configured such that the average rotation/thumb force applied to the user engaging end of the lever to achieve full retraction system retraction is at least 1.8° per Newton over the course of the full retraction system retraction.

In some aspects, the techniques described herein relate to a circular saw, wherein the lower blade guard is configured such that the average rotation/thumb force applied to the user engaging end of the lever to achieve full retraction system retraction is at least 3.5° per Newton over the course of the full retraction system retraction.

In some aspects, the techniques described herein relate to a circular saw, wherein the lower blade guard is configured to rotate through a range of motion by applying force to the lever with a difference of no more than 20 newtons between a highest minimum force and a lowest minimum force needed to rotate the lower blade guard.

In some aspects, the techniques described herein relate to a circular saw, wherein the contact member is a roller wheel.

In some aspects, the techniques described herein relate to a circular saw, wherein a lever spring is positioned between the upper blade housing and the lever pivot point, the lever spring biased to restore the lever to a resting position.

In some aspects, the techniques described herein relate to a circular saw, wherein a lower guard spring is positioned between the upper blade housing and the lower blade guard adjacent to the axis.

In some aspects, the techniques described herein relate to a circular saw, wherein the lever includes an aperture positioned at the lever pivot point, and the lever is coupled to the upper blade housing via a bushing positioned in the aperture.

In some aspects, the techniques described herein relate to a circular saw including: a blade housing configured to house a blade rotated by an output spindle coupled to the blade housing; and a window positioned in the blade housing having a window longitudinal direction positioned at an angle between 0° and 45° degrees with respect to a plane including the blade.

In some aspects, the techniques described herein relate to a circular saw, wherein the angle is between 7° and 9°.

In some aspects, the techniques described herein relate to a circular saw, wherein the window includes a laminated glass.

In some aspects, the techniques described herein relate to a circular saw, wherein the window is retained between the blade housing and a window retaining frame coupled to the blade housing.

In some aspects, the techniques described herein relate to a circular saw, wherein the window further includes a plane of glass and a viscoelastic circumferential seal.

In some aspects, the techniques described herein relate to a circular saw, wherein the viscoelastic circumferential seal includes a channel-shaped cross-sectional profile having three sides that is flared at a joint between a first side and a second side.

In some aspects, the techniques described herein relate to a circular saw, further including: an illuminator positioned on a side of the window outside the blade housing, the illuminator configured to radiate light towards the blade.

In some aspects, the techniques described herein relate to a circular saw, further including: a lens positioned between the illuminator and the window.

In some aspects, the techniques described herein relate to a circular saw, wherein the window further includes a light baffle member positioned on a window surface along a horizontal dimension of the circular saw in an operational direction between the illuminator and a blade of the circular saw.

In some aspects, the techniques described herein relate to a circular saw, wherein the window further includes a pane of glass and a viscoelastic circumferential seal including an integrated light baffle member.

In some aspects, the techniques described herein relate to a circular saw including: a blade housing configured to house a blade rotated by an output spindle, the blade housing including a chip collector ramp configured to receive chips generated when the blade cuts through a workpiece; and a chip collector including: a chip container including a chip entry port coupled to the chip collector ramp, and an outer housing that substantially covers a face of the chip container, the outer housing including a first vent and a second vent, the first vent and the second vent being fluidly connected via a continuous air path in a gap area between the chip container and the outer housing and positioned to provide passive cooling to the chip container.

In some aspects, the techniques described herein relate to a circular saw, wherein the first vent is at a first end of the outer housing and the second vent is at a second end of the outer housing.

In some aspects, the techniques described herein relate to a circular saw, wherein at least a portion of the chip container includes a metal.

In some aspects, the techniques described herein relate to a circular saw, wherein at least a portion of the outer housing includes a plastic.

In some aspects, the techniques described herein relate to a circular saw, wherein the chip container includes an opening in the face that provides ventilation to an interior of the chip container through the outer housing.

In some aspects, the techniques described herein relate to a circular saw, wherein the chip collector includes a screen that covers the opening.

In some aspects, the techniques described herein relate to a circular saw, wherein the screen is further positioned between the outer housing and the opening.

In some aspects, the techniques described herein relate to a circular saw, wherein at least one of the first vent or the second vent is a space between the outer housing and the opening.

In some aspects, the techniques described herein relate to a circular saw, wherein the screen is positioned within a middle third of the chip collector in a vertical dimension when the circular saw is in an operating position.

In some aspects, the techniques described herein relate to a circular saw, wherein the continuous air path is a first continuous air path and the outer housing further includes a third vent, and the second vent and the third vent are connected via a second continuous air path between the chip container and the outer housing.

In some aspects, the techniques described herein relate to a circular saw, wherein the outer housing further includes a coupler between the first vent and the third vent operable to couple the chip collector to the blade housing.

In some aspects, the techniques described herein relate to a circular saw including: a motor housing that at least partially houses a motor, the motor having a motor spindle including a first stage pinion; a blade housing that at least partially houses a transmission including: an intermediate gear including a first stage gear configured to engage the first stage pinion and a second stage pinion, the intermediate gear positioned at a trailing end of the motor spindle opposite a cutting end of the circular saw in a horizontal dimension when the circular saw is in an operational position, and an output spindle including an output gear configured to engage the second stage pinion; and a blade coupled to the output spindle.

In some aspects, the techniques described herein relate to a circular saw, wherein the output gear has an output gear diameter that is less than or equal to approximately 20% of a blade diameter of the blade.

In some aspects, the techniques described herein relate to a circular saw, wherein the output gear has an output gear diameter that is less than or equal to approximately 16.5% of a blade diameter of the blade.

In some aspects, the techniques described herein relate to a circular saw, wherein the blade includes a blade diameter of 7 ¼ in and the circular saw is operable to generate a depth of cut of at least 2 5/8 in.

In some aspects, the techniques described herein relate to a circular saw, wherein the intermediate gear rotates on a fixed pin coupled to the intermediate gear via a needle bearing.

A number of embodiments have been described. Nevertheless, it will be understood that various modifications may be made without departing from the spirit and scope of the specification.

In addition, any logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Terms of degree such as "generally," "substantially," and "about" may be used herein when describing the relative positions, sizes, dimensions, or values of various elements, components, regions, layers and/or sections. These terms mean that such relative positions, sizes, dimensions, or values are within the defined range or comparison (e.g., equal or close to equal) with sufficient precision as would be understood by one of ordinary skill in the art in the context of the various elements, components, regions, layers and/or sections being described.

While certain features of the described implementations have been illustrated as described herein, many modifications, substitutions, changes and equivalents will now occur to those skilled in the art. It is, therefore, to be understood that the appended claims are intended to cover all such modifications and changes as fall within the scope of the implementations. It should be understood that they have been presented by way of example only, not limitation, and various changes in form and details may be made. Any portion of the apparatus and/or methods described herein may be combined in any combination, except mutually exclusive combinations. The implementations described herein can include various combinations and/or sub-combinations of the functions, components and/or features of the different implementations described.

## Claims

1. A circular saw comprising:
an upper blade housing;
a lower blade guard coupled to the upper blade housing, the lower blade guard rotates about an axis and includes a guide track, and
a lever having a guide track engaging end and a user engaging end, the lever coupled to the upper blade housing at a lever pivot point positioned between the guide track engaging end and the user engaging end, the guide track engaging end including a contact member configured to engage the guide track to rotate the lower blade guard.

2. The circular saw of claim 1, wherein the user engaging end includes a movable lever positioned exterior to the upper blade housing.

3. The circular saw of claim 1 or 2, wherein the contact member is configured to pull up on the guide track or apply an outward force to the guide track.

4. The circular saw of any preceding claim, wherein the contact member engages the guide track at a trailing horizontal side of the lever pivot point opposite a cutting horizontal side of the lever pivot point.

5. The circular saw of claim 2, 3 or 4, wherein the lower blade guard is configured such that an average rotation/thumb force applied to the user engaging end of the lever to achieve full retraction system retraction is:
at least 1.8° per Newton over a course of the full retraction system retraction; or
at least 3.5° per Newton over a course of the full retraction system retraction.

6. The circular saw of any of claims 2 to 5, wherein the lower blade guard is configured to rotate through a range of motion by applying force to the lever with a difference of no more than 20 newtons between a highest minimum force and a lowest minimum force needed to rotate the lower blade guard.

7. The circular saw of any preceding claim, wherein the contact member is a roller wheel.

8. The circular saw of any preceding claim, wherein a lever spring is positioned between the upper blade housing and the lever pivot point, the lever spring biased to restore the lever to a resting position.

9. The circular saw of any preceding claim, wherein a lower guard spring is positioned between the upper blade housing and the lower blade guard adjacent to the axis.

10. The circular saw of any preceding claim, wherein the lever includes an aperture positioned at the lever pivot point, and the lever is coupled to the upper blade housing via a bushing positioned in the aperture.

11. A circular saw comprising:
a blade housing configured to house a blade rotated by an output spindle coupled to the blade housing; and
a window positioned in the blade housing having a window longitudinal direction positioned at an angle between 0° and 45° degrees with respect to a plane including the blade.

12. The circular saw of claim 11, wherein the angle is between 7° and 9°.

13. The circular saw of claim 11 or 12, wherein the window comprises a laminated glass.

14. The circular saw of any of claims 11 to 13, wherein the window is retained between the blade housing and a window retaining frame coupled to the blade housing.

15. The circular saw of any of claims 11 to 14, further comprising:
an illuminator positioned on a side of the window outside the blade housing, the illuminator configured to radiate light towards the blade.
